(19) Europäisches Patentamt
European Patent Office
Office européen des brevets

(11) **EP 4 692 578 A1**

(12) **EUROPEAN PATENT APPLICATION**
published in accordance with Art. 153(4) EPC

(43) Date of publication:
**11.02.2026 Bulletin 2026/07**

(21) Application number: **24823157.3**

(22) Date of filing: **15.05.2024**

(51) International Patent Classification (IPC):
**F16C 33/20** *(2006.01)*     **F16C 33/14** *(2006.01)*

(52) Cooperative Patent Classification (CPC):
**B22F 1/00; B22F 7/00; C22C 9/06; F16C 33/10;
F16C 33/12; F16C 33/14; F16C 33/20**

(86) International application number:
**PCT/JP2024/017877**

(87) International publication number:
**WO 2024/257535 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 JP 2023096877**

(71) Applicant: **Senju Metal Industry Co., Ltd.
Tokyo 120-8555 (JP)**

(72) Inventors:
• **SATO, Naoki
  Tokyo 120-8555 (JP)**

• **TAKESHITA, Toshiaki
  Tokyo 120-8555 (JP)**
• **TANIBATA, Hideaki
  Tokyo 120-8555 (JP)**
• **NOGUCHI, Naokazu
  Tokyo 120-8555 (JP)**
• **KAWAMATA, Yuji
  Tokyo 120-8555 (JP)**
• **SUZUKI, Ryoichi
  Tokyo 120-8555 (JP)**

(74) Representative: **Hoffmann Eitle
Patent- und Rechtsanwälte PartmbB
Arabellastraße 30
81925 München (DE)**

(54) **SLIDING MEMBER AND METHOD FOR PRODUCING SLIDING MEMBER**

(57)    A sliding member includes a cylindrical metal substrate; a porous layer formed on the inner peripheral surface of the metal substrate; and a sliding layer covering the porous layer. The porous layer is formed of a metal simple substance or an alloy composition. The sliding layer is formed of a resin composition. The sliding member has, on a part of the inner peripheral surface, a region where the resin composition is absent and thus a nonporous layer formed of the metal simple substance or the alloy composition is exposed.

EP 4 692 578 A1

# FIG. 1

**Description**

Technical Field

The present disclosure relates to a sliding member and a method for manufacturing the sliding member.

Background Art

Nowadays, electric cars (electric vehicles: EVs), including batteries and motors as power source, have been increasingly substituted for conventional cars, including engines as power source, from the viewpoint of energy efficiency and $CO_2$ emissions. Since the outputs of motors depend on the rotational speeds and the torques, increases in the rotational speeds enable controlling the torques to reduce the volumes. Increases in the rotational speeds of motors are therefore essential for the downsizing and the weight saving of parts and the power saving. Electric compressors including built-in driving motors have been increasingly strongly required to be downsized and lightened in car air conditioners for maintaining the comfortability in cars.

The Transmission Research Association for Mobility Innovation (TRAMI), which is the union of domestic automakers and others, has announced that TRAMI will shift the priority of the investigation from internal combustion engines to motors for electric cars (EVs) and technology related thereto. Although most existing motors for EVs rotate at speeds of around 13,000 rpm, the rotational speeds of motors will expectedly increase to 20,000 rpm or more in the near future. The investigation has therefore been advanced for achieving an ultra-high rotational speed of 30,000 to 50,000 rpm. Countermeasures are required to be taken against higher-speed rotation for balancing the downsizing and weight saving and the output enhancement especially for driving motors and electric compressors of EVs.

In rotary machines such as motors and compressors, supporting the main shafts, components such as bearings and seals supporting the rotating objects thereof play important roles. The sliding surfaces of these mechanical components deteriorate with time, resulting in increases in the coefficients of friction or the abrasion thereof. Consequently, heat is generated to raise the temperature, so that various parts of the rotary machines begin to deteriorate. Finally, the rotary machines cannot function as machines satisfactorily to reach their life spans. If friction or heat generation accompanying increases in the rotational speeds of motors allows oil that should be in spaces of bearings supporting the rotating shafts to flow out, or foreign substances enter the spaces, the sliding surfaces rise in temperature abnormally or vibrate abnormally violently, so that the surfaces of the sliding materials begin to be molten, leading to seizure. Thus, the performance deterioration or the malfunction of mechanical parts often results mainly from friction or abrasion. An encapsulated refrigerant and refrigerator oil are used for lubricating plain bearings for compressors. The lubrication conditions greatly vary depending on conditions of use. If bearings are lubricated with only a liquefied refrigerant or almost dry, severe lubrication conditions are expected.

Accordingly, plain bearings that are high in abrasion resistance or seizure resistance are required under conditions of use of boundary lubrication on which it is difficult to form oil films, for example, due to increase in rotational speeds of drive trains or the eccentricity of the shafts. Furthermore, plain bearings are also required to be assembled highly precisely for the following reason: the dimensional precision of bearings related to the spaces between the shafts and the bearings, the shapes of the inner surfaces of the bearings, which contacts with the shafts, and the presence or absence of protrusions of joined portions greatly affect the lives of machines.

Since the conditions of use around bearings are hard due to the shift to new refrigerants accompanying chlorofluorocarbon regulations or countermeasures against global warming, bearings are required having still higher performances to plain bearings used for compressors.

Japanese Patent Laid-Open No. 2018-179049 proposes that a rolling bearing be used in portions of auto parts or others required to rotate at high speed. Unfortunately, rolling bearings have shorter lives than plain bearings. Plain bearings have been desired that are usable even at high rotational speed and have longer lives.

The present applicant has already proposed a sliding member having a seamless sliding surface as a sliding member that is high in abrasion resistance and seizure resistance in the high-speed rotational region and a method for manufacturing the sliding member (Japanese Patent Application No. 2023-026107).

Summary of Invention

Desired have been a sliding member in which a temperature rise is further suppressed in the high-speed rotational region than the sliding member proposed in Japanese Patent Application No. 2023-026107 and a method for manufacturing the sliding member.

A sliding member according to one embodiment comprises

a cylindrical metal substrate;

a porous layer formed on the inner peripheral surface of the metal substrate; and
a sliding layer covering the porous layer,
the porous layer is formed of a metal simple substance or an alloy composition,
the sliding layer is formed of a resin composition, and
the sliding member has, on a part of the inner peripheral surface, a region where the resin composition is absent and thus a nonporous layer formed of the metal simple substance or the alloy composition is exposed.

A bearing according to one embodiment comprises

a cylindrical metal substrate;
a porous layer formed on the inner peripheral surface of the metal substrate; and
a sliding layer covering the porous layer,
the porous layer is formed of a metal simple substance or an alloy composition,
the sliding layer is formed of a resin composition, and
the sliding member has, on a part of the inner peripheral surface, a region where the resin composition is absent and thus a nonporous layer formed of the metal simple substance or the alloy composition is exposed.

A method for manufacturing a sliding member according to one embodiment comprises:

a step of forming a porous layer comprising a metal simple substance or an alloy composition on one surface of a metal substrate;
a step of curling the metal substrate with the porous layer inside to shape into a cylinder;
a step of welding the seam portion from outside the metal substrate, wherein the porous layer on the seam portion is molten to form a nonporous layer formed of the metal simple substance or the alloy composition; and
a step of impregnating the surface of the porous layer with a raw material resin of a sliding layer and firing the raw material resin to form a sliding layer comprising the resin composition and covering the porous layer, wherein the surface of the nonporous layer is not impregnated with the raw material resin, whereby a region where the resin composition is absent and thus the nonporous layer is exposed is formed on a part of the inner peripheral surface of the sliding member.

A method for manufacturing a sliding member according to one embodiment comprises:

a step of forming a porous layer comprising a metal simple substance or an alloy composition on one surface of a metal substrate;
a step of impregnating the surface of the porous layer with a raw material resin of a sliding layer and firing the raw material resin to form a sliding layer comprising the resin composition and covering the porous layer;
a step of curling the metal substrate with the sliding layer inside to shape into a cylinder; and
a step of welding the seam portion from outside the metal substrate, wherein the porous layer on the seam portion is molten to form a nonporous layer formed of the metal simple substance or the alloy composition, and the sliding layer on the seam portion is separated, whereby a region where the resin composition is absent and thus the nonporous layer is exposed is formed on a part of the inner peripheral surface of the sliding member.

Brief Description of Drawings

[Figure 1] Figure 1 is a perspective view showing a schematic configuration of a sliding member according to one embodiment.
[Figure 2] Figure 2 is a photographic image of the weld of a sliding member according to one embodiment photographed from the outer peripheral side.
[Figure 3] Figure 3 is a photographic image of the region corresponding to the weld of a sliding member according to one embodiment and photographed from the inner peripheral side.
[Figure 4] Figure 4 is an optical micrograph of a sectional structure of the region corresponding to the weld before the formation of a sliding layer (impregnation with a resin and firing of the resin).
[Figure 5] Figure 5 is a reflected electron composition image of a sectional structure of a region other than the weld of a sliding member according to one embodiment.
[Figure 6] Figure 6 is a flow chart showing one example of a method for manufacturing a sliding member according to one embodiment.

[Figure 7] Figure 7 is a flow chart showing another example of a method for manufacturing a sliding member according to one embodiment.

[Figure 8] Figure 8 illustrates a step of sprinkling raw material powder and a step of sintering the raw material powder to form a porous layer.

[Figure 9] Figure 9 illustrates a step of impregnation with raw material resin.

[Figure 10] Figure 10 illustrates a burnishing step.

[Figure 11] Figure 11 is a figure showing a schematic configuration of a high-speed rotational abrasion tester.

[Figure 12] Figure 12 illustrates a position of a load point (load division A) inside a sliding member according to Example during measurement in a high-speed rotational abrasion test.

[Figure 13] Figure 13 is a table collectively showing the compositions and others of sliding members according to Example and Comparative Examples 1 to 3.

[Figure 14] Figure 14 is a graph showing variations over time in the temperatures of bearings, namely sliding members according to Example and Comparative Examples 1 to 3, measured at a shaft rotational speed, N, of 15,000 rpm.

[Figure 15] Figure 15 is a graph showing variations over time in the temperatures of bearings, namely the sliding members according to Example and Comparative Examples 1 to 3, measured at a shaft rotational speed, N, of 20,000 rpm.

[Figure 16] Figure 16 is a graph showing variations over time in the temperatures of bearings, namely the sliding members according to Example and Comparative Examples 1 to 3, measured at a shaft rotational speed, N, of 25,000 rpm.

[Figure 17] Figure 17 is a graph showing variations over time in the temperatures of bearings, namely the sliding members according to Example and Comparative Examples 1 to 3, measured at a shaft rotational speed, N, of 30,000 rpm.

[Figure 18] Figure 18 is a graph showing variations over time in the temperatures of bearings, namely the sliding members according to Example and Comparative Example 1, measured at a shaft rotational speed, N, of 35,000 rpm.

[Figure 19] Figure 19 is a graph showing variations in the rates of increase in temperature of the sliding members according to Example and Comparative Examples 1 to 3 vs. the shaft rotational speed in the range of 10,000 to 50,000 rpm.

[Figure 20] Figure 20 is a graph showing variations in power consumption of the sliding members according to Example and Comparative Examples 1 to 3 vs. the shaft rotational speed in the range of 10,000 to 50,000 rpm.

[Figure 21] Figure 21 is a graph showing variations in the rates of increase in temperature of the sliding members according to Example and Comparative Examples 1 to 3 vs. the shaft rotational speed in the neighborhoods of shaft rotational speeds at which the rates of increase in temperature and the power consumption rise sharply.

[Figure 22] Figure 22 is a graph showing variations in power consumption of sliding members according to Example and Comparative Examples 1 to 3 vs. the shaft rotational speed in the neighborhoods of shaft rotational speeds at which the rates of increase in temperature rises sharply.

[Figure 23] Figure 23 illustrates a position of a load point (load division B) inside the sliding member according to Example during measurement in a high-speed rotational abrasion test.

[Figure 24] Figure 24 is a graph showing variations in the rates of increase in temperature of the sliding member according to Example measured at the load divisions A and B vs. the shaft rotational speed.

[Figure 25] Figure 25 is a graph showing variations in power consumption of the sliding member according to Example measured at the load divisions A and B vs. the shaft rotational speed.

[Figure 26] Figure 26 is a graph showing the inner diameter precision of the sliding member according to Example.

[Figure 27] Figure 27 is a graph showing the inner diameter precision of the sliding member according to Comparative Example 1.

Description of Embodiments

A sliding member according to a first aspect of an embodiment comprises

a cylindrical metal substrate;
a porous layer formed on the inner peripheral surface of the metal substrate; and
a sliding layer covering the porous layer,
the porous layer is formed of a metal simple substance or an alloy composition,
the sliding layer is formed of a resin composition, and
the sliding member has, on a part of the inner peripheral surface, a region where the resin composition is absent and thus a nonporous layer formed of the metal simple substance or the alloy composition is exposed.

According to such an aspect, the region where the resin composition is absent and thus the nonporous layer formed of the metal simple substance or the alloy composition is exposed is disposed on a part of the inner peripheral surface of the sliding member. In this region, the resin composition present around this region is absent, and the nonporous layer does not contain many pores unlike the porous layer. The region is therefore sunken, and functions as a groove. Since the inner surface of the groove is out of contact with the shaft as an object to be slid during the use of the sliding member, the groove can contribute to a reduction of heat generation due to the friction. This suppresses the temperature rise in the high-speed rotational region to also improve the performance itself as a bearing. Since the groove maintains oil film formation on the sliding surface especially in the presence of lubricating oil or grease, the use of the sliding member is expected to further reduce heat generation than the use thereof under dry conditions.

In addition, the region where the resin composition is absent and thus the nonporous layer formed of the metal simple substance or the alloy composition is exposed is disposed on a part of the inner peripheral surface of the sliding member, so that the protrusion of the joined portion does not appear on the sliding surface, which reduces torque generated by friction on the seam. This contributes to a reduction in power consumption to cut energy loss. Accordingly, the region can contribute to carbon neutral.

Conventional rolling bearings that are used at high rotational speed in EV motors and electric compressors can be replaced with the sliding member of the present embodiment, resulting in downsizing and weight saving.

Furthermore, if conventional sliding members having sliding surfaces with joined portion are applied to motors or compressors, a step of cutting the inner surface (namely aligning the inner surfaces on the seam portion) is necessary. Meanwhile, the sliding member according to the present embodiment is provided with, on a part of the inner peripheral surface of the sliding member, the region where the resin composition is absent and thus the nonporous layer formed of the metal simple substance or the alloy composition is exposed, so that the protrusion of the joined portion does not appear on the sliding surface, which enables omitting the step of cutting the inner surface.

A sliding member according to a second aspect of the embodiment is the sliding member according to the first aspect,

wherein the region is disposed so as to extend from one end to the other end in the axial direction of the sliding member.

Such an aspect enables obtaining the effect of reducing heat generation due to friction continuously from the one end to the other end in the axial direction, and therefore enables achieving further suppression of a temperature rise in the high-speed rotational region.

A sliding member according to a third aspect of the embodiment is the sliding member according to the first or second aspect,

a hard particle powder comprising a Laves phase constituted of a composition of Co, Mo and Si is dispersed in the sliding layer.

A sliding member according to a fourth aspect of the embodiment is the sliding member according to the third aspect,

wherein one or more of $MoS_2$ powder and bronze powder not comprising a Laves phase are further dispersed in the sliding layer.

A sliding member according to a fifth aspect of the embodiment is the sliding member according to the first or second aspect,

wherein the resin composition comprises copper sulfide, a thermoplastic resin, molybdenum disulfide, graphite, and aramid fiber, with the balance consisting of a fluorine resin, wherein the resin composition comprises more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

A sliding member according to a sixth aspect of the embodiment is the sliding member according to any of the first to fifth aspects,

the porous layer has
a matrix phase comprising Cu and Sn, and
hard particles dispersed in the matrix phase and comprising a Laves phase constituted of a composition of Co, Mo and Si.

A sliding member according to a seventh aspect of the embodiment is the sliding member according to the sixth aspect,

wherein the porous layer further has
compound phases dispersed in the matrix phase and containing Co, Fe, Ni, Si, and Cr.

A sliding member according to an eighth aspect of the embodiment is the sliding member according to any of the first to seventh aspects,
wherein the thickness ratio of the porous layer to the sliding layer is 6:4 to 8:2.

A bearing according to a ninth aspect of the embodiment comprises:

a cylindrical metal substrate;
a porous layer formed on the inner peripheral surface of the metal substrate; and
a sliding layer covering the porous layer,
the porous layer is formed of a metal simple substance or an alloy composition,
the sliding layer is formed of a resin composition, and
the bearing has, on a part of the inner peripheral surface, a region where the resin composition is absent and thus a nonporous layer formed of the metal simple substance or the alloy composition is exposed.

A method for manufacturing a sliding member according to a tenth aspect of the embodiment comprises:

a step of forming a porous layer comprising a metal simple substance or an alloy composition on one surface of a metal substrate;
a step of curling the metal substrate with the porous layer inside to shape into a cylinder;
a step of welding the seam portion from outside the metal substrate, wherein the porous layer on the seam portion is molten to form a nonporous layer formed of the metal simple substance or the alloy composition; and
a step of impregnating the surface of the porous layer with a raw material resin of a sliding layer and firing the raw material resin to form a sliding layer comprising the resin composition and covering the porous layer, wherein the surface of the nonporous layer is not impregnated with the raw material resin, whereby a region where the resin composition is absent and thus the nonporous layer is exposed is formed on a part of the inner peripheral surface of the sliding member.

A method for manufacturing a sliding member according to an eleventh aspect of the embodiment comprises:

a step of forming a porous layer comprising a metal simple substance or an alloy composition on one surface of a metal substrate;
a step of impregnating the surface of the porous layer with a raw material resin of a sliding layer and firing the raw material resin to form a sliding layer comprising the resin composition and covering the porous layer;
a step of curling the metal substrate with the sliding layer inside to shape into a cylinder; and
a step of welding the seam portion from outside the metal substrate, wherein the porous layer on the seam portion is molten to form a nonporous layer formed of the metal simple substance or the alloy composition, and the sliding layer on the seam portion is separated, whereby a region where the resin composition is absent and thus the nonporous layer is exposed is formed on a part of the inner peripheral surface of the sliding member.

A method according to a twelfth aspect of the embodiment is the method according to the tenth or eleventh aspect, further comprising:
a step of pressing a columnar cored bar inside the inner peripheral surface of the sliding layer with the outer peripheral surface of the metal substrate held with a die to burnish the inner peripheral surface of the sliding layer.

Hereinafter, specific examples of embodiments will be described in detail with reference to the attached drawings. Noted that "%" with respect to compositions used herein is "% by mass" unless otherwise specified. "A to B" (both A and B are numbers) used herein means "A or more and B or less" unless otherwise specified. The "main ingredient" used herein refers to a component contained at 50% by mass or more with respect to the whole composition. As used herein, the "hard particle powder" refers to powder in the mixed powder before sintering or powder dispersed in the resin composition of the sliding layer, and the "hard particles" refer to particles in the porous layer after the sintering. Since Cu and Sn contained in the hard particle powder move into a matrix phase during the sintering to some extent as described below, the content of the hard particles in a porous layer varies from the amount of hard particle powder blended in the mixed powder, and the contents of constituent elements in the hard particles are different from the contents of constituent elements in the hard particle powder (the hard particles are particles having a composition in which the contents of Sn and Cu among the chemical components decrease to some extent as compared with the hard particle powder). The "seam" as used herein refers to a portion by which two objects (or two ends of one object) are connected so as to be continuous, and is an expression that includes both a welded portion and an unwelded portion. In the case of an unwelded portion, the "seam" means both a portion at which two objects (or two ends of one object) are in contact and a portion at which a small space is left between two objects (or two ends of one object). The "small space" as used here may specifically have any width as long as, in the whole view of the seam, the space has such a width that it can be considered that the two objects (or the two ends of one object) are connected so as to be continuous. For example, the width may be one tenth or less, one fiftieth or less, or one hundredth or less of the whole length. The unwelded "seam" herein may be referred to as a "joined portion".

<Configuration of sliding member>

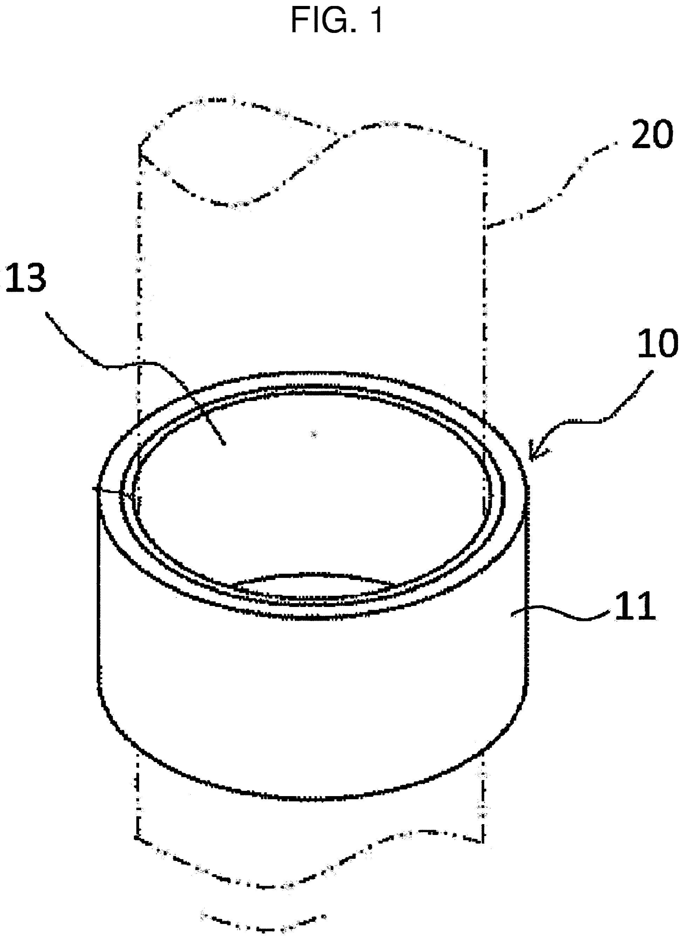

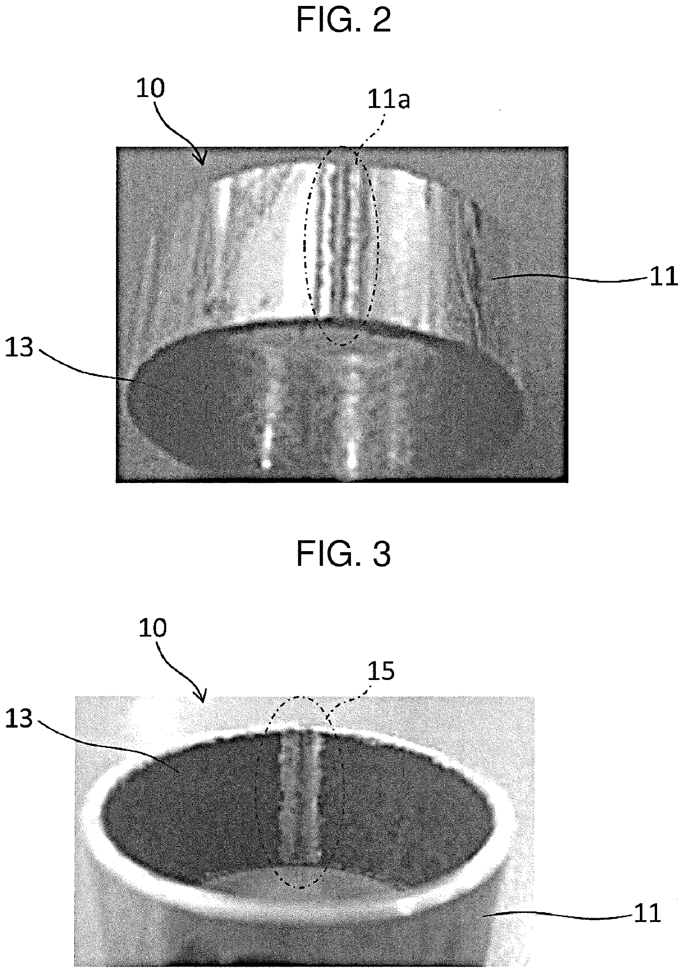

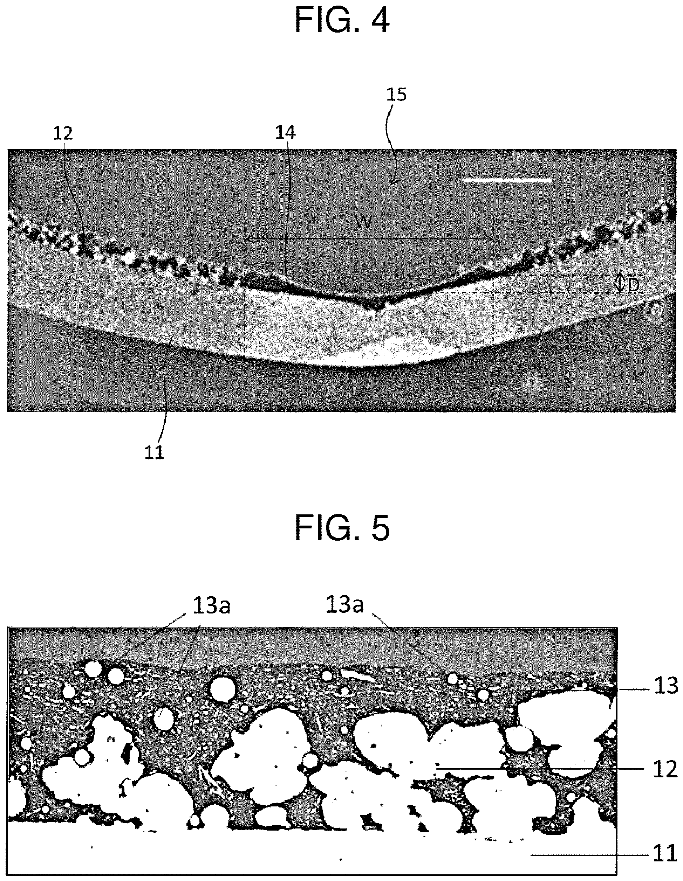

Figure 1 is a perspective view showing a schematic configuration of a sliding member 10 according to one embodiment. Figure 2 is a photographic image of the weld of the sliding member 10 photographed from the outer peripheral side. Figure 3 is a photographic image of the region corresponding to the weld of the sliding member 10 and photographed from the inner peripheral surface. Figure 4 is an optical micrograph of a sectional structure of the region corresponding to the weld before the formation of a sliding layer (impregnation with a resin and firing of the resin). Figure 5 is a reflected electron composition image of a sectional structure of a region other than the weld of a sliding member according to one embodiment. In Figures 4 and 5, the upside of the figure corresponds to the inner periphery of the sliding member 10, and the downside of the figure corresponds to the outer periphery of the sliding member 10.

As shown in Figures 1 to 5, for example, the sliding member 10 is a plain bearing, and comprises a cylindrical metal substrate 11, a porous layer 12 formed on the inner peripheral surface of the metal substrate 11, and a sliding layer 13 covering the porous layer 12. Among these, the porous layer 12 is formed of a metal simple substance or an alloy composition, and the sliding layer 13 is formed of a resin composition.

As shown in Figure 1, the sliding member 10 as a plain bearing supports a shaft 20 as an object to be slid on the sliding layer 13 forming a cylindrical inner peripheral surface. The sliding layer 13 may have an inner diameter circularity of 50 $\mu$m or less, or may have an inner diameter circularity of 20 $\mu$m or less. In this case, friction is reduced on the inner peripheral surface of the sliding layer 13, which enables achieving further decrease in abrasion and heat generation.

The sliding member 10 is applicable to either of a form in which a shaft 20 moves rotationally and a form in which a shaft 20 moves linearly. For example, the sliding member 10 may be used as sliding portions of shock absorbers for cars using oil in a form in which the shaft moves linearly. For example, the sliding member 10 may be used as sliding portions using oil in a rotary form such as gear pumps in which gear-shaped members are rotated to deliver the oil. Hereinafter, the components of the sliding member 10 will be described in detail.

As shown in Figures 1 to 3, the metal substrate 11 has a cylindrical shape. For example, a metal plate material can be curled to shape into a cylinder, followed by welding a seam part 11a (refer to Figure 2) to manufacture the metal substrate 11. The material of the metal substrate 11 has such strength and shape stability as to be used as a back metal base material of a bearing, the material of the metal substrate 2 is not particularly limited, but may be, for example, low-carbon steel (SPCC, SS400, or the like) or a copper-plated steel plate, in which a Fe-based plate material is plated with Cu.

The porous layer 12 has a cylindrical shape, and is formed by sintering metal powder (the mixed powder described below or alloy powder into which the mixed powder is formed during the spraying thereof) on the surface of the metal substrate 11. The thickness of the porous layer 12 may be such a thickness that two or more metal powder particles can be stacked and sintered, for example, a thickness of 0.5 mm or less.

The porous layer 12 is impregnated with a resin composition at a predetermined thickness, followed by firing the resin composition with which the porous layer 12 is impregnated to form the sliding layer 13. The thickness of the sliding layer 13 (the thickness from the surface of the metal substrate 11) may be set at a higher value on average than the thickness of the porous layer 12 so that the porous layer 12 is not exposed. The thickness ratio of the porous layer 12 to the sliding layer 13 may be 6:4 to 8:2, for example, 7:3.

The resin composition of the sliding layer 13 contains a fluorine resin as the main ingredient. As the fluorine resin to be the base resin of the resin composition, for example, PTFE (polytetrafluoroethylene), PFA (perfluoroalkoxy alkane), FEP (perfluoroethylene-propene copolymer), EFFE (ethylene-tetrafluoroethylene copolymer), and the like may be used.

The resin composition may contain PTFE, which is a fluorine resin, as the main ingredient and contain another fluorine resin such as PFA than PTFE as an additive optionally. The content of the other fluorine resin contained as the optional component may be 0% by volume or more and 20% by volume or less of the resin composition.

Examples of commercial PTFE rein include POLYFLON(R) D-210C and F-201 (available from DAIKIN INDUSTRIES, LTD.), Fluon (R) AD911D (AGC Inc.), and Teflon(R) 31JR and 6C-J (Chemours-Mitsui Fluoroproducts Co., Ltd.).

As shown in Figure 5, hard particle powder 13a containing a Laves phase constituted of a composition of Co, Mo, and Si may be dispersed in the resin composition of the sliding layer 13. Here, the Laves phase is an intermetallic compound based on an $AB_2$ type wherein the $AB_2$ type comprises an A element and a B element, and the atom radius ratio A to B is around 1.2:1, and includes three structures, namely a $MgZn_2$ (C14) type, a $MgCu_2$ (C15) type, and a $MgNi_2$ (C36) type. The Laves phase constituted of a composition of Co, Mo, and Si (more specifically, $Co_3Mo_2Si$) is a Laves phase in which the A element is Mo, the B element is Co, and 25 at% of the Co is substituted with Si, and is of the $MgZn_2$ type, having a hexagonal crystal structure. The Vickers hardness of the Laves phase constituted of $Co_3Mo_2Si$ is 1000 to 1200 Hv. Although it is conceivable that the hard particle powder 13a dispersed in the sliding layer 13 receives a higher load than the resin composition forming the sliding layer 13, the hard Laves phase constituted of a composition of Co, Mo and Si can be deposited on the frictional surface to support the load, resulting in acting on a reduction in the abrasion of the sliding layer 13 advantageously.

Mo in the Laves phase and S in lubricating oil can form a sulfide film of $MoS_2$ on the frictional surfaces. $MoS_2$ is a material known as a sulfide that contributes to improvement in frictional characteristics instead of the solid lubricity of lead. Since a bond between sulfur atoms is weaker than a bond between molybdenum atoms and a bond between a molybdenum atom and a sulfur atom, friction selectively cleaves bonds between sulfur atoms, this leads to lubrication, which can act on abrasion suppression effectively. A Mo oxide generated on the frictional surface by the oxidation of Mo in the Laves phase during the sliding also exhibits a lubrication effect, and can act on abrasive suppression effectively.

One or more of molybdenum disulfide ($MoS_2$) powder and bronze powder not containing a Laves phase may be further dispersed in the resin composition of the sliding layer 13. As described above, $MoS_2$ is a material known as a sulfide that exhibits solid lubricity instead of lead to contribute to improvement in friction characteristics. Since bonds between sulfur atoms are weaker than bonds between molybdenum atoms or bonds between molybdenum atoms and sulfur atoms, the friction of $MoS_2$ selectively breaks bonds between sulfur atoms, resulting in lubrication, so that $MoS_2$ can act on the suppression of the abrasion effectively.

As one variation, the resin composition of the sliding layer 13 may comprise copper sulfide (CuS), a thermoplastic resin, molybdenum disulfide ($MoS_2$), graphite, and aramid fiber, with the balance being a fluorine resin (however, the resin composition does not contain lithium phosphate). In this case, the resin composition of the sliding layer 13 may contain more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

Since the resin composition forming the sliding layer 13 contains copper sulfide as a metal sulfide, the sliding layer 13 has improved heat radiation characteristics. This suppresses the temperature rise of the sliding layer 13 due to the sliding of the object to be slid to inhibit the sliding layer 13 from deforming accompanying the temperature rise.

Since the resin composition for forming the sliding layer 13 contains copper sulfide as the metal sulfide, the sliding layer 13 has improved strength. It is known that if a resin composition for forming a sliding layer contains a carbon fiber filler, the resin layer has improved strength. Meanwhile, even though a resin composition does not contain a carbon fiber filler, the resin composition containing copper sulfide improves the strength in the same way as a resin composition containing a carbon fiber filler. Improvement in the strength of the sliding layer 13 suppresses the deformation of the sliding layer 5 due to the sliding of the object to be slid.

If the sliding layer 13 deforms greatly, the abrasion loss is greater than if the sliding layer 13 scarcely deforms. If the sliding layer 13 is inhibited from deformation, the abrasion of the sliding layer 13 is therefore suppressed, resulting in improvement in abrasion resistance characteristics. Improvement in the strength of the sliding layer 13 also suppresses the abrasion. The suppression of abrasion of the sliding layer 13 inhibits the porous layer 12 from being exposed to enable controlling dry touch, which is a direct contact between the porous layer 12 and the object to be slid, and leads to seizure, so that the seizure resistance is improved.

Examples of known copper sulfide include copper(I) sulfide ($Cu_2S$) and copper(II) sulfide (CuS). Copper (I) sulfide ($Cu_2S$) is stable even at 1000°C or more. Meanwhile, copper(II) sulfide (CuS) changes into copper(I) sulfide ($Cu_2S$) at around 200°C. If polytetrafluoroethylene is used as the resin, in the step of forming the sliding layer 13 by firing, a resin composition 4 is heated at more than 327°C. If the resin composition contains copper(II) sulfide (CuS), in the step of forming the sliding layer 13 by firing, the copper(II) sulfide (CuS) therefore changes into copper(I) sulfide ($Cu_2S$).

Copper(I) sulfide ($Cu_2S$) is therefore contained in the sliding layer 13 of the manufactured resultant sliding member 10. Although copper(I) sulfide ($Cu_2S$) or copper(II) sulfide (CuS) may be used as the raw material for the copper sulfide, it is preferable from the viewpoint of processability to use copper(II) sulfide (CuS).

If molybdenum disulfide as the metal sulfide is further incorporated into the resin composition for forming the sliding layer 13, the sliding layer 13 has improved sliding characteristics to the object to be slid in contact with the sliding layer 13. The incorporation of graphite into the resin composition for forming the sliding layer 13 also improves the sliding characteristics. This enables the sliding member having a composition not containing lead (Pb) to exhibit sliding characteristics equivalent to the sliding characteristics of a sliding member containing Pb. Hereinafter, the resin composition of the sliding layer 13 according to one variation will be described in detail.

[Copper sulfide: more than 3% by mass and less than 40% by mass]

In order to improve the heat radiation characteristics and the strength, the resin composition for forming the sliding layer 13 preferably contains copper sulfide at more than 8% by mass and less than 40% by mass. If the amount of copper sulfide added is 3% by mass or less and 40% by mass or more, the heat radiation characteristics are deteriorated, resulting in the inhibition of the abrasion resistance characteristics. Examples of commercial items include copper(II) sulfide (CuS) available from TERADA YAKUSEN, Inc., copper(II) sulfide (CuS) available from KANTO CHEMICAL CO.,INC., and copper(I) sulfide ($Cu_2S$) available from Kojundo Chemical Lab. Co., Ltd.

[Plastic resin: 0% by mass or more and 4% by mass or less]

In the resin composition of the sliding layer 13 according to the one variation, the thermoplastic resin is not an essential additive, but the thermoplastic resin is preferably added since the addition of the thermoplastic resin enables the sliding layer 13 to improve in abrasion resistance and creep resistance characteristics, in which the fluorine resin is poor.
The addition of the thermoplastic resin at more than 4% by mass inhibits the low-friction characteristics of the fluorine resin. Examples of commercial PPS resin as the thermoplastic resin include PQ-208, which is available from DIC Corporation, and Fortron(R) KPS, which is available from KUREHA CORPORATION.

[Graphite: 0% by mass or more and 10% by mass or less]

In the resin composition of the sliding layer 13 according to the one variation, graphite is not an essential additive, but can be expected to contribute to improvement in self-lubricity and heat resistance; and low-friction characteristics, and abrasion resistance characteristics. The addition of graphite at more than 10% by mass inhibits the low-friction characteristics. Examples of commercial graphite include UCP and CPB, which are available from Nippon Graphite Industries, Co., Ltd., and the AT Series, which is available from Oriental Sangyo Co., Ltd.

[Molybdenum sulfide: 0% by mass or more and 36% by mass or less]

In the resin composition of the sliding layer 13 according to the one variation, molybdenum disulfide ($MoS_2$) is not an essential additive, but the addition thereof enables reducing the frictional resistance.
If the amount of molybdenum disulfide added exceeds 36% by mass, in the step of impregnating the porous layer, the impregnatability is deteriorated. Examples of commercial molybdenum disulfide include H/G $MoS_2$, which is available from TAIYO KOKO CO., LTD., and the molybdenum disulfide powder series, which is available from Daizo Corporation.

[Aramid fiber: 0% by mass or more and 10% by mass or less]

In the resin composition of the sliding layer 13 according to the one variation, aramid fiber is not an essential additive, but is added to obtain the mechanical strength. The addition of aramid fiber at 10% by mass or more inhibits uniform dispersion, so that the abrasion resistance characteristics are deteriorated. Examples of commercial aramid fiber include Kevlar(R), which is available from DU PONT-TORAY CO., LTD., and Twaron (R) of TEIJIN LIMITED.
As another variation, the resin composition of the sliding layer 13 may contain any of zinc compounds (ZnS (zinc sulfide), ZnO (zinc oxide), $ZnSO_4$ (zinc sulfate), and the like), carbon fiber, iron oxide, barium sulfate, aramid fiber, graphite, calcium compounds ($CaCO_3$ (calcium carbonate), $CaSO_4$ (calcium sulfate), Ca $(OH)_2$ (calcium hydroxide), and the like), zinc, zinc alloys or a plurality thereof as an optional additive or optional additives. Incorporating a zinc compound into the resin composition enables improving the elastic modulus to suppress the deformation of the sliding layer 13 due to external force, resulting in suppressing an increase or a decrease in the contact area. Incorporating carbon fiber into the resin composition enables improving the value of the kinetic frictional force and change in the static frictional force and the kinetic frictional force, resulting in improvement in sliding characteristics. Incorporating iron oxide into the resin composition enables improving the elastic modulus in addition to the abrasion resistance. Incorporating barium sulfate or aramid fiber into the resin composition enables enhancing the abrasion resistance without inhibiting the addition of a zinc compound from improving the elastic modulus. Incorporating graphite into the resin composition enables reducing the frictional resistance without inhibiting the addition of a zinc compound from improving the elastic modulus. Incorporating a calcium compound, zinc, or a zinc alloy into the resin composition enables improving the abrasion resistance without inhibiting the addition of a zinc compound from improving the elastic modulus.
As one variation, the porous layer 12 may have a matrix phase containing Cu and Sn and hard particles dispersed in the matrix phase. The alloy powder into which the mixed powder is formed during the spraying of the mixed powder may be sintered into the porous layer 12. The formation of the mixed powder into the alloy powder promotes the sintering of the powder to form necks, resulting in bonding the powders sufficiently. The formation of the mixed powder into the alloy powder also micronizes the hard particles and disperses the hard particles in the matrix phase uniformly. If the hard particle powder 13a is dispersed in the sliding layer 13 described above, the porous layer 13 may not contain the hard particles.
The matrix phase is a bronze-based alloy containing Cu as the main ingredient and further containing Sn. The matrix phase may be constituted of a solid solution of Cu, Sn, and Ni.
Bi particles may be distributed on the crystal grain boundary of the matrix phase. In this case, when Bi exhibits self-lubrication action on the frictional surface to which the porous layer 3 is partially exposed by the abrasion of the sliding layer 4 in the same way as Pb of the conventional lead bronze, and functions as a lubricant between the two rubbed surfaces, the friction can be reduced.
The hard particles may contain a Laves phase constituted of a composition of Co, Mo, and Si. It is conceivable that if the sliding layer 13 is abraded, resulting in partial exposure of the porous layer 12, the hard particles dispersed in the matrix phase receive a higher load than soft bronze that is the matrix phase. The hard Laves phase constituted of a composition of Co, Mo, and Si is deposited on the frictional surface to support the load, so that the hard particles can however act on a reduction in the abrasion of the porous layer 12 advantageously. Mo in the Laves phase and S in the lubricating oil can form a sulfide film of $MoS_2$ on the frictional surfaces. $MoS_2$ is a material known as a sulfide that contributes to improvement in frictional characteristics instead of the solid lubricity of lead. Since a bond between sulfur atoms is weaker than a bond between molybdenum atoms and a bond between a molybdenum atom and a sulfur atom, friction selectively cleaves bonds between sulfur atoms, leading to lubrication, which can act on the abrasion suppression effectively. Mo oxide generated on the frictional surface by the oxidation of Mo in the Laves phase during the sliding also exhibits a lubrication effect, and can act on the abrasive suppression effectively.

If the porous layer 12 contains the hard particles, for example, the content of the hard particles may be 40% by mass or less per 100% by mass of the whole porous layer 12. The content of the hard particles may be, for example, 0.1% by mass or more per 100% by mass of whole porous layer 12. If the content of the hard particles is 0.1% by mass or more, the hard particles exhibit the effect of reducing the abrasion of the porous layer 12 as described above. The content of the Laves phase constituted of a composition of Co, Mo, and Si may be, for example, 0.1 to 20% by mass per 100% by mass of the whole porous layer 12. If the hard particle powder 13a is dispersed in the sliding layer 13 described above and the porous layer 12 does not contain the hard particles, the total content of Cu and Sn may be 99.9% or more per 100% by mass of the whole porous layer 12.

The porous layer 3 may further have compound phases dispersed in the matrix phase. The compound phases may contain Co, Fe, Ni, Si, and Cr. The formation the compound phases in the matrix phase enables enhancing the hardness of the matrix phase, and enables acting on improvement in the seizure resistance advantageously.

The sliding member 10 according to the present embodiment includes the following four aspects:

(1) an aspect in which the porous layer 12 contains the hard particles, and the sliding layer 13 does not contain the hard particle powder 13a;
(2) an aspect in which the porous layer 12 does not contain the hard particles, and the sliding layer 13 contains the hard particle powder 13a;
(3) an aspect in which the porous layer 12 contains the hard particles, and the sliding layer 13 contains the hard particle powder 13a; and
(4) an aspect in which the porous layer 12 does not contain the hard particles, and the sliding layer 13 does not contain the hard particle powder 13a. In any of the aspects (1) to (3) among these, the sum of the content of the hard particles and the content of the hard particle powder 13a may be 1 to 20% by mass, for example, 15% by mass, per 100% by mass of the combination of the porous layer 12 and the sliding layer 13 (namely the balance obtained by excluding the metal substrate 11 from the whole sliding member 10).

As shown in Figures 3 and 4, the sliding member 10 has, on a part of the inner peripheral surface, a region 15 where the resin composition is absent and thus a nonporous layer 14 (refer to Figure 4) formed of the metal simple substance or the alloy composition is exposed. Although, in the example shown in Figure 3, only one region 15 without the resin composition is disposed on the inner peripheral surface of the sliding member 10, a plurality of the regions 15 may be disposed. As shown in Figure 3, the region 15 without the resin composition may be disposed so as to extend from one end to the other end in the axial direction of the sliding member 10. The region 15 without the resin composition may be disposed on the seam part 11a (refers to Figure 2) of the metal substrate 11. The nonporous layer 14 may be formed of the metal simple substance or the alloy composition that is the same as that of the porous layer 12.

As shown in Figure 4, since the metal simple substance or the alloy composition constituting the porous layer 12 is molten, the nonporous layer 14 has a shape in which the inner surface being sunken. For example, the recess of the nonporous layer 14 may have a depth, D, of 0.2 to 0.3 mm. The nonporous layer 14 may have a width (length in the circumferential direction), W, that is 0.1 to 10% of the inner circumference of the sliding member 10. For example, if the sliding member 10 has an inner circumference of 60 to 70 mm, the nonporous layer 14 may have a width, W, of 1.0 to 3.0 mm.

<Method for manufacturing sliding member>

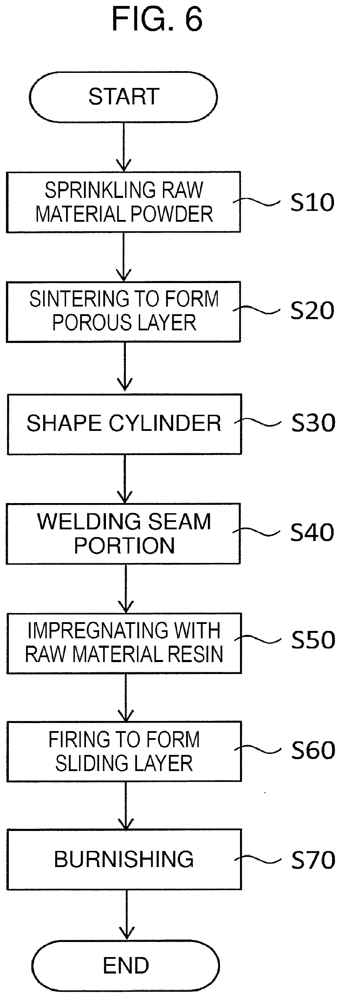

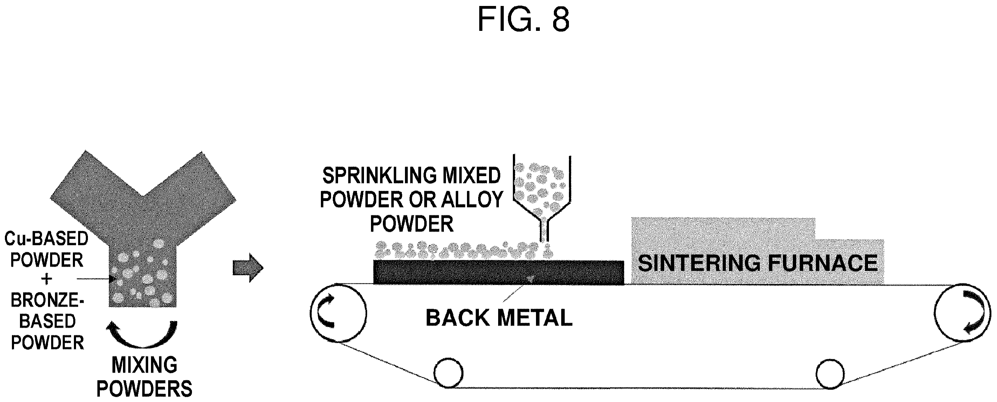

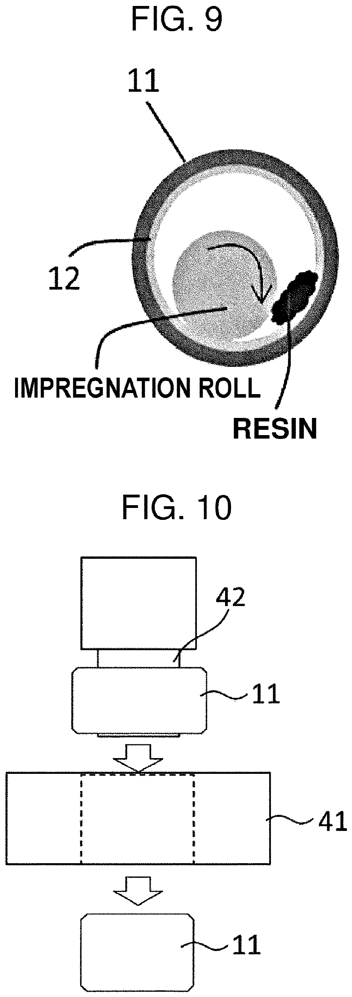

One example of a method for manufacturing the sliding member 10 having such a configuration will then be described with reference to Figures 6, and 8 to 10. Figure 6 is a flow chart showing one example of the method for manufacturing a sliding member 10. Figure 8 illustrates a step of sprinkling raw material powder and a step of sintering the raw material powder into the porous layer. Figure 9 illustrates the step of impregnation with the raw material resin. Figure 10 illustrates the burnishing step.

As shown in Figures 6 and 8, the raw material powder of a porous layer 12 is first sprinkled on one surface of a plate-shaped metal substrate (step S10).

The raw material powder may be a first powder containing Cu and Sn; a mixed powder in which the first powder and hard particle powder containing a Laves phase constituted of a composition of Co, Mo, and Si are mixed; or a mixed powder in which a second powder containing Cu, Co, Fe, Ni, Si, and Cr is further mixed with the first powder and the hard particle powder.

Here, the first powder is a bronze-based alloy powder containing Cu as the main ingredient and further containing Sn. The first powder may further contain Bi or P. If the first powder contains Bi, Bi particles are deposited in a matrix phase 10 at the time of the sintering of the raw material powder described below (namely, step S20), Bi exhibits self-lubrication action in the same way as Pb in the conventional lead bronze, friction can therefore be reduced. If the first powder contains P, oxygen contained in copper can be removed (deoxidized) to suppress hydrogen embrittlement. The contents of the constituent elements of the first powder may be Sn: 10 to 11% by mass and Cu: the balance. If the first powder further contains Bi, Bi: 7 to 9% by mass. If the first powder contains P, it is preferable that P: 0.02% by mass or less. The amount of the first powder blended in the raw material powder is the amount of the balance obtained by deducting the total amount of powders blended other than the first powder from the amount of the whole raw material powder blended.

The hard particle powder is an alloy powder containing a Laves phase constituted of a composition of Co, Mo, and Si and Cu, and is a hard particle powder containing Cu, Si, Fe, Mo, Co and Cr. The hard particle powder may further contain Sn, and for example, may contain Sn at 1% by mass or more. The solid phase temperature of the hard particle powder not containing Sn reaches around 1450°C, but the incorporation of Sn enables reducing the solid phase temperature of the hard particle powder, and enables solid phase-sintering the hard particle powder on a back metal base material at around 800°C. Sn contained in the hard particle powder is dissolved on a Cu-Sn matrix phase side formed by the first powder for diffusion bonding at the time of sintering. The progress of the sintering due to the powdery shrinkage through Sn enables exhibiting solid solution strengthening by Sn in the matrix phase and Sn contained in the hard particle powder. The contents of the constituent elements in the hard particle powder may be Co: 14 to 20% by mass, Mo: 24 to 28% by mass, Si: 3 to 7% by mass, Fe: 2 to 16% by mass, Cr: 1 to 10% by mass, and Cu: the balance, per 100% by mass of the whole hard particle powder. If the hard particle powder contains Sn, the contents of the constituent elements in the hard particle powder may be Co: 14 to 20% by mass, Mo: 24 to 28% by mass, Si: 3 to 7% by mass, Fe: 2 to 16% by mass, Cr: 1 to 10% by mass, Sn: 1 to 15% by mass, and Cu: the balance with the content of the whole hard particle powder defined as 100% by mass. The amount of the hard particle powder blended may be 1 to 40% by mass, and is preferably 1 to 3% by mass, per 100% by mass of the whole raw material powder (namely, 100% by mass of the whole sliding layer 12). Since Cu and Sn are molten out of the hard particle powder during the sintering, the content of the hard particles in the sliding layer 12 varies from the amount of the hard particle powder blended in the raw material powder.

The second powder is an alloy powder containing Cu as the main ingredient and further containing Co, Fe, Ni, Si, and Cr. The second powder may further contain Sn, and, for example, may contain Sn at 1% by mass or more. The solid phase temperature of the second powder not containing Sn reaches around 1240°C, but the incorporation of Sn enables reducing the solid phase temperature of the second powder, and enables solid phase-sintering the second powder on the back metal base material at around 800°C. If the second powder contains Sn, the contents of the constituent elements in the second powder may be Co: 0.6 to 4.6% by mass, Fe: 1.6 to 5.6% by mass, Ni: 10 to 14% by mass, Si: 0.5 to 4.5% by mass, Cr: 0.5 to 1.5% by mass, Sn: 1 to 15% by mass, and Cu: the balance with the content of the whole second powder defined as 100% by mass. If the second powder is contained in raw material powder, the amount of the second powder blended may be 2 to 38% by mass, and is preferably 10 to 38% by mass and more preferably 17 to 19% by mass with the content of the whole raw material powder defined as 100% by mass.

The amount of the hard particle powder blended is 1 to 40% by mass, and the amount of the second powder blended may be 15 to 18% by mass, per 100% by mass of the whole raw material powder. In this case, excellent shearing workability can be achieved.

The first powder, the hard particle powder, and the second powder can each be produced, for example, by spraying using gas atomization. In the gas atomization, the heat source for melting may be high-frequency waves, and zirconia may be used for the crucible (with a nozzle attached to the bottom).

For example, the grain diameter of the first powder may be 45 μm to 180 μm. The hard particle powder may be fine powder having a grain diameter of 53 μm or less. The grain diameter of the second powder may be 53 μm to 150 μm. Here, the "grain diameter" refers to particle size distribution measured by laser diffraction/scattering using the particle size distribution measuring apparatus MT3300EXII, manufactured by MicrotracBEL Corp. This measuring method is a measuring method according to the test procedure including the step of extracting powder from paste and the following in "4.2.3 Laser diffraction grain size distribution measurement test" of JIS Z3284-2.

The raw material powder sprinkled on the metal substrate 11 is then sintered at 800 to 900°C to form a porous layer 12 (step S20). As described above, the solid phase temperatures of the hard particle powder not containing Sn and the second powder reach around 1450°C and 1240°C, respectively, but the incorporation of Sn enables reducing the solid phase temperatures of the hard particle powder and the second powder, and enables solid phase-sintering the hard particle powder and the second powder on the metal substrate 11 (back metal base material) at around 800°C. Sn contained in the hard particle powder is dissolved in the Cu-Sn matrix phase 10 side formed by the first powder during sintering for diffusion bonding. The progress of the sintering due to powdery shrinkage through Sn exhibits solid solution strengthening by Sn in matrix phase 10 and Sn contained in the hard particle powder, and enables forming an alloy having high strength finally.

The metal substrate 11 is then curled to shape into a cylinder with the porous layer 12 inside (step S30). The seam portion 11a is subsequently welded from outside the metal substrate 11 (step S40). The welding method may be TIG welding (argon gas welding) or laser welding (pulse welding). At this time, heat for welding melts the porous layer 12 on the seam portion 11a and crushes many pores contained in the porous layer 12 to form a nonporous layer 14 formed of a metal simple substance or an alloy composition. A joined portion does not appear on the inner surface. Since the nonporous layer 14 has a smaller apparent volume by the volume of the pores contained in the porous layer 12, the nonporous layer 14 is sunken from the inner surface of the porous layer 12.

The following burnishing is optional. While the outer peripheral surface of the metal substrate 11 is then held with a die 41 (refer to Figure 10) after the step of welding the seam portion 11a (step S40), a columnar cored bar 42 may be pressed inside the porous layer 12 for burnishing the inner peripheral surface of the porous layer 12.

The surface of the porous layer 12 is then impregnated with raw material resin of a sliding layer 13 (step S50). As shown in Figure 9, for example, a predetermined amount of a resin composition is specifically fed to the porous layer 12 formed on the inner peripheral surface of the metal substrate 11 and pressed against the porous layer 12 by rotational pressure from an impregnation roll, so that the porous layer 12 is impregnated with the resin composition. One or more of the hard particle powder 13a containing a Laves phase constituted of a composition of Co, Mo and Si and molybdenum disulfide ($MoS_2$) powder may be dispersed in the resin composition to be fed onto the porous layer 12. As one variation, the resin composition contains copper sulfide as an additive, may further contain molybdenum disulfide, and may contain graphite and aramid fiber as other additives. The resin composition is fed onto the porous layer 12 in such an amount that the sliding layer 13 covers the porous layer 12 at such thickness that the porous layer 12 is not exposed from the surface of sliding layer 13 after the below-described firing of the resin composition.

Since the metal simple substance or the alloy composition constituting the porous layer 12 is molten at this time, the surface of the nonporous layer 14 does not allow the raw material resin to impregnate into the porous spaces, so that the raw material resin is merely rests on top of the nonporous layer 14.

The resin composition is then heated at temperature higher than the melting point of the resin contained in the resin composition, so that the organic solvent is volatilized while the resin is molten. The resin is then cured to form a sliding layer 13 comprising the resin composition and covering the porous layer 12 (step S60). The heating the resin composition at a predetermined temperature to form the sliding layer 13 is referred to as firing. Note that the polytetrafluoroethylene for the resin has a melting point of 327°C. The resin composition may be heated at temperature exceeding the melting points of the polytetrafluoroethylene (for example, 400 to 500°C) with a firing furnace to fire the sliding layer 13.

Since the surface of the nonporous layer 14 is molten by welding at this time, the resin composition is easily separated from the nonporous layer 14. The resin composition may be separated from the nonporous layer 14 by contactless means such as gravity or air pressure or by brushing after the formation of the sliding layer 13. The resin composition is separated from the nonporous layer 14 to form, on a part of the inner peripheral surface, a region 15 where the resin composition is absent and thus the nonporous layer 14 is exposed.

With reference to Figure 10, while the outer peripheral surface of the metal substrate 11 is then held with a die 41, a columnar cored bar 42 is pressed inside the sliding layer 13 for burnishing the inner peripheral surface of the sliding layer 13, resulting in the reduction of the inner diameter circularity to 50 μm or less (step S70). The sliding member 10 having the configuration described above (refer to Figure 1 to Figure 5) is manufactured thereby.

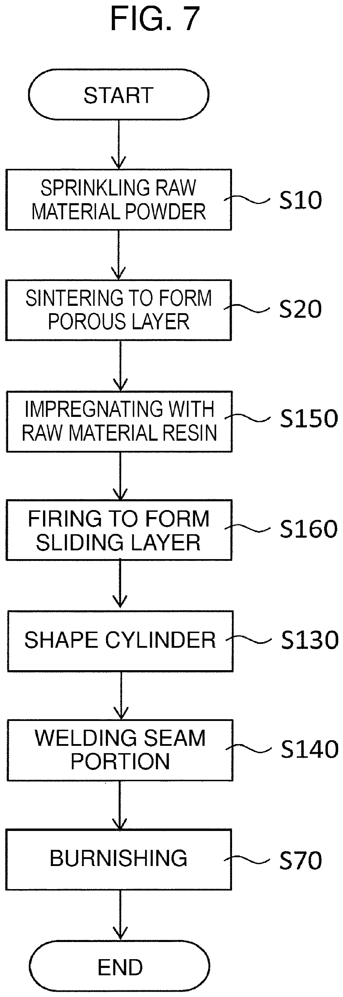

With reference to Figure 7, another example of a method for manufacturing a sliding member 10 will then be described. Figure 7 is a flow chart showing another example of the method for manufacturing the sliding member 10.

Raw material powder of a porous layer 12 is first sprinkled on one surface of a metal substrate (step S10) in the same way as in the one example of the manufacturing method described above. The raw material powder sprinkled on the metal substrate 11 is then sintered to form a porous layer 12 (step S20).

As shown in Figure 7, a predetermined amount of a resin composition is then fed onto the porous layer 12 and pressed against the porous layer 12, so that the porous layer 3 is impregnated with the resin composition (step S150). The amount of the resin composition fed onto the porous layer 12 is such an amount that the porous layer 12 is covered with the sliding layer 13 having such a thickness that the porous layer 12 is not exposed from the surface of the sliding layer 13 after the firing of the resin composition described below.

The resin composition is then heated at temperature higher than the melting point of the resin contained in the resin composition, so that the organic solvent is volatilized while the resin is molten. The resin is then cured to form the sliding layer 13 comprising the resin composition and covering the porous layer 12 (step S160).

The metal substrate 11 is then curled to shape into a cylinder with the sliding layer 13 inside (step S130). The seam portion 11a is subsequently welded from outside the metal substrate 11 (step S140). The welding method may be TIG welding (argon gas welding) or laser welding (pulse welding). At this time, heat for welding melts the porous layer 12 on the seam portion 11a and crushes many pores contained in the porous layer 12 to form a nonporous layer 14 formed of a metal simple substance or an alloy composition. At the same time, the resin composition on the seam portion 11a is separated to form, on a part of the inner peripheral surface, a region 15 where the resin composition is absent and thus the nonporous layer 14 is exposed.

With reference to Figure 10, while the outer peripheral surface of the metal substrate 11 is then held with a die 41, a columnar cored bar 42 is pressed inside the sliding layer 13 for burnishing the inner peripheral surface of the sliding layer 13, resulting in the reduction of the inner diameter circularity to 50 $\mu$m or less (step S70). The sliding member 10 having the configuration described above (refer to Figure 1 to Figure 5) is manufactured thereby.

According to the present embodiment as mentioned above, the region 15 where the resin composition is absent and thus the nonporous layer 14 formed of the metal simple substance or the alloy composition is exposed is disposed on a part of the inner peripheral surface of the sliding member 10, so that the resin composition present around the region is absent in the region, and the nonporous layer does not contain many pores unlike the porous layer. The region is therefore sunken, and functions as a groove. Since the inner surface of the groove is out of contact with the shaft as an object to be slid during the use of the sliding member 10, the groove can contribute to a reduction of heat generation due to the friction. This suppresses a temperature rise in the high-speed rotational region to also improve the performance itself as a bearing. Since the groove maintains oil film formation on the sliding surface especially in the presence of lubricating oil or grease, the use of the sliding member further reduces heat generation expectedly than the use thereof under dry conditions.

The region 15 where the resin composition is absent and thus the nonporous layer 14 formed of the metal simple substance or the alloy composition is exposed is disposed on a part of the inner peripheral surface of the sliding member 10. Since a protrusion of the joined portion does not appear on the sliding surface, this enables reducing torque generated by friction on the seam. This contributes to a decrease in power consumption, and reduces energy loss. Accordingly, this can contribute to carbon neutral.

Conventional rolling bearings that are used at high rotational speed in EV motors and electric compressors can be replaced with the sliding member 10 of the present embodiment, resulting in the downsizing and the weight saving.

Furthermore, if conventional sliding members having seamed sliding surfaces are applied to motors or compressors, a step of cutting the inner surface (namely aligning the inner surfaces on the seam portion) is necessary. Meanwhile, the sliding member 10 according to the present embodiment is provided with the region 15 where the resin composition is absent and thus the nonporous layer 14 formed of the metal simple substance or the alloy composition is exposed, on a part of the inner peripheral surface of the sliding member 10, so that the protrusion of the joined portion does not appear on the sliding surface, which enables omitting the step of cutting the inner surface.

According to the present embodiment, the region 15 without the resin composition is disposed so as to extend from one end to the other end in the axial direction of the sliding member 10. The embodiment therefore enables obtaining the effect of reducing heat generation due to the friction continuously from the one end to the other end in the axial direction, which therefore enables achieving further suppression of the temperature rise in the high-speed rotational region.

According to the present embodiment, the region 15 without the resin composition is sunken, and functions as a groove. Consequently, while the seam portion 11a of the metal substrate 11 is welded, heat for welding forms the region 15. The number of steps can be smaller than if the sliding layer is processed into an uneven shape after the formation of the sliding layer.

Examples

Specific examples according to the present embodiment will then be described.

(Manufacturing of sliding members)

First, coarse powder having a grain size of 150 $\mu$m or more is removed from bronze powder (amorphous, trademark: CP-301) available from FUKUDA METAL FOIL & POWDER CO., LTD. to obtain powder. The obtained powder is then provided as raw material powder of a porous layer 12. The bronze powder has a chemical composition of Cu-10Sn.

As Example, the raw material powder of a porous layer 12 was then sprinkled onto a copper-plated steel plate and then sintered at 880°C to form a porous layer 12. The steel plate on which the porous layer 12 was formed was subsequently slitted to a width of 67.6 mm in order to obtain a cylinder having an inner diameter of 20 mm. While pressure was then applied to the slitted steel plate through side rolls, the slitted steel plate is shaped into a cylinder from the width direction. The seam portion of the steel plate was argon gas-welded from outside the cylinder, followed by water cooling, burring, and molding by sizing. The cylinder was cut to a total length of 10 mm to obtain a cylindrical metal substrate 11 in which the porous layer 12 was formed on the inner peripheral surface. With reference to Figure 10, a cored bar 42 was then pressed inside the porous layer 12 with an Amsler tester while the outer peripheral surface of the metal substrate 11 was held with a die 41. A load was applied to the inner peripheral surface of the porous layer 12 thereby to modify (burnish) the inner peripheral surface.

The inner peripheral surface of the porous layer 12 was then impregnated with resin. The incorporated resin had a composition of graphite powder: 1.1% by mass; hard particle powder containing a Laves phase constituted of a composition of Co, Mo, and Si: 15% by mass; and PTFE resin as the balance, and $MoS_2$ powder: 15% by mass was further added for improving the self-lubricity. The hard particle powder has a chemical composition of Cu-4.5Sn-5Si-15Fe-16Co-4Cr-26Mo, and is fine powder having a grain size under 53 $\mu$m. The graphite powder is available from Nippon Graphite Industries, Co., Ltd. (trademark: CPBW-5).

With reference to Figure 9, in the method for impregnating the porous layer with the resin, the resin was applied to the inner peripheral surface of the porous layer 12 with a spatula. The porous layer 12 was impregnated with the resin by rolling pressure while the resin is pressed with a rolling cored bar having a diameter of 11.7 mm. The resin was then fired with a firing furnace under the conditions of a firing temperature of 480°C and a conveyer speed 1000 mm/min.

With reference to Figure 10, a cored bar 42 was pressed inside the sliding layer 13 with an Amsler tester while the outer peripheral surface of the metal substrate 11 was held with a die 41. A load was applied to the inner peripheral surface of the sliding layer 13 thereby to modify (burnish) the inner peripheral surface.

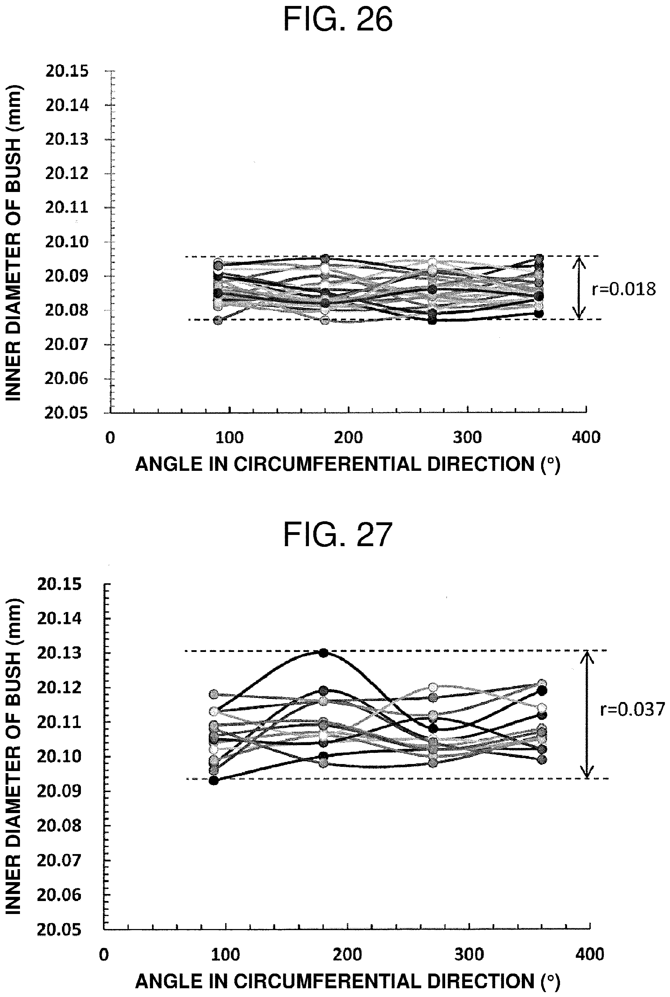

A sliding member according to Example was obtained by the above-mentioned manufacturing process. The sliding member according to Example has a welded portion extending from one end to the other end in the axial direction of the sliding member 10 on the outer peripheral surface of the metal substrate 11. The region 15 is disposed so as to extend from the one end to the other end in the axial direction of the sliding member 10 on the inner peripheral surface opposite to the welded portion, the nonporous layer 14 being exposed. Figure 26 is a graph showing inner diameters measured at angles of 90°, 180°, 270°, and 360° in the circumferential direction of the sliding member according to Example. As shown in Figure 26, the inner diameter precision of the sliding member according to Example was 0.018 mm or less.

Sliding members according to Comparative Examples 1 and 2 were manufactured by the manufacturing process described in Japanese Patent Application No. 2023-026107. That is, a carbon steel round bar was lathed to an outer diameter of 22 mm, an inner diameter of 20.62 mm, and a total length of 10.35 mm to obtain a seamless thin cylindrical metal substrate as Comparative Example 1. A carbon steel plate material having a length of 67 mm, a width of 11 mm, and a thickness of 0.75 mm was processed into the shape of a wrapped bush to obtain a cylindrical metal substrate having a seam with a width of 2 mm or less (of a joined portion type) as Comparative Example 2.

In the case of Comparative Example 1, with reference to Figures 5 and 6A of Japanese Patent Application No. 2023-026107, a carbon steel jig having an outer diameter of 19.96 mm was inserted inside the metal substrates having an inner diameter of 20.62, followed by feeding the same bronze powder as in Example into the space between the inner peripheral surface of the metal substrate and the outer peripheral surface of the jig having a width of 0.3 mm. The inner diameter of the metal substrate is 20.6 mm, the outer diameter of the jig is 19.96 mm, the total length is 10.35 mm, and the volume of the powder packed is therefore 0.21 $cm^3$. In the case of Comparative Example 2, with reference to Figure 6B of Japanese Patent Application No. 2023-026107, the metal substrate was press-fitted inside a housing to allow the seam (joined portion) to be in close contact. The carbon steel jig was then concentrically disposed inside the metal substrate press-fitted inside the housing, followed by feeding the same bronze powder as in Example into an annular space between the inner peripheral surface of the metal substrate and the outer peripheral surface of the jig having a width of 0.3 mm. In either of Examples 1 and 2, while the jig was rotated using a motor with a rotating shaft connected to the jig, the powder was packed for improving the fluidity of the powder fed into the space. The raw material powder was sintered in this state in a sintering furnace under conditions of a sintering temperature of 880°C and a conveyer speed of 230 mm/min.

In the case of each of Comparative Examples 1 and 2, the inside of the cylindrical metal substrate having sintered bronze powder was impregnated with resin. The incorporated resin had a composition of graphite powder: 1.1% by mass; hard particle powder containing a Laves phase constituted of a composition of Co, Mo, and Si: 15% by mass; and PTFE resin as the balance, and $MoS_2$ powder: 15% by mass was further added for improving the self-lubricity. The hard particle powder has a chemical composition of Cu-4.5Sn-5Si-15Fe-16Co-4Cr-26Mo, and is fine powder having a grain size under 53 $\mu$m. The graphite powder is available from Nippon Graphite Industries, Co., Ltd. (trademark: CPBW-5). Since the method for impregnating the porous layer with the resin is the same as in Example, described above, the explanation is omitted.

In the same way as in Example, described above, a cored bar 42 was pressed inside the sliding layer with an Amsler tester while the outer peripheral surface of the metal substrate was held with a die 41. A load was applied to the inner peripheral surface of the sliding layer 13 thereby to modify (burnish) the inner peripheral surface.

Sliding members according to Comparative Examples 1 and 2 were obtained by the above-mentioned manufacturing processes. Figure 27 is a graph showing inner diameters measured at angles of 90°, 180°, 270°, and 360° in the circumferential direction of the sliding member according to Comparative Example 1. As shown in Figure 27, the inner diameter precision of the sliding member according to Example was 0.037 mm or less. It is conjectured that the inner diameters of sliding members manufactured in a powder packing style involving packing bronze powder, followed by sintering to manufacture sliding members one by one in the same way as in Comparative Examples 1 and 2 vary more widely than the inner diameters of sliding members manufactured in a style involving sintering bronze powder and then shaping a steel plate into a cylinder in the same way as in Example.

As Comparative Example 3, the same bronze powder as in Example and Comparative Examples 1 and 2 was sprinkled onto a carbon steel plate material (metal substrate) and sintered to form a porous layer. The porous layer was then impregnated with resin constituted of graphite powder: 4% by mass; $MoS_2$ powder: 7.25% by mass; and PTFE resin as the balance. The resin was then fired to form a sliding layer covering the porous layer, followed by rolling. Subsequently, the rolled metal substrate was processed into the shape of a wrapped bush with the sliding layer inside to manufacture a sliding member including the metal substrate, the porous layer, and the sliding layer all having a seam (joined portion).

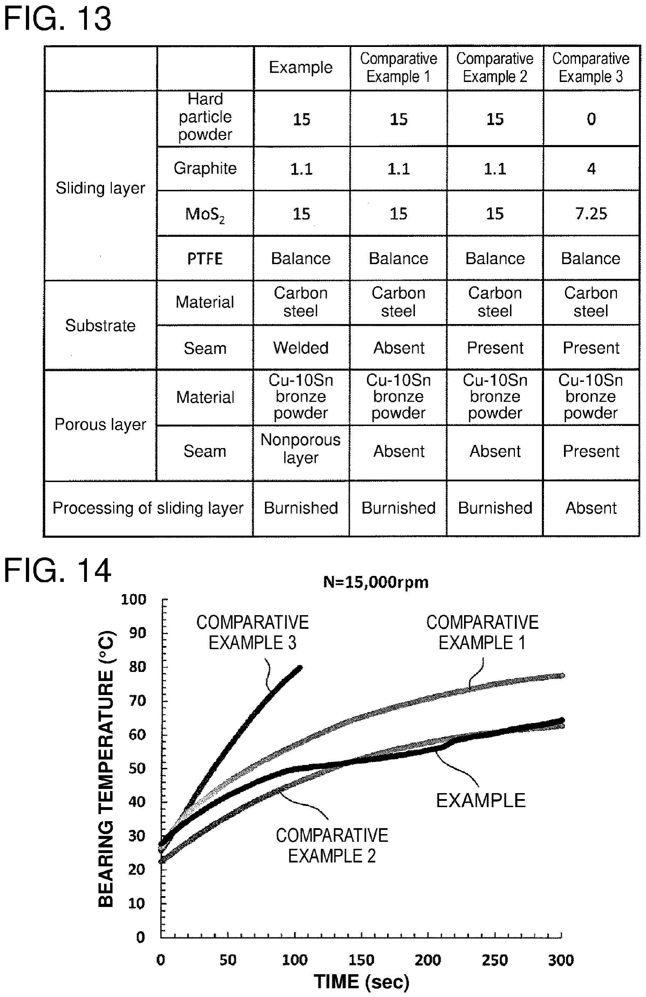

Figure 13 is a table collectively showing the compositions and others of the sliding members according to Examples and Comparative Examples 1 to 3 manufactured in the above-described procedure.

(High-speed rotational abrasion test)

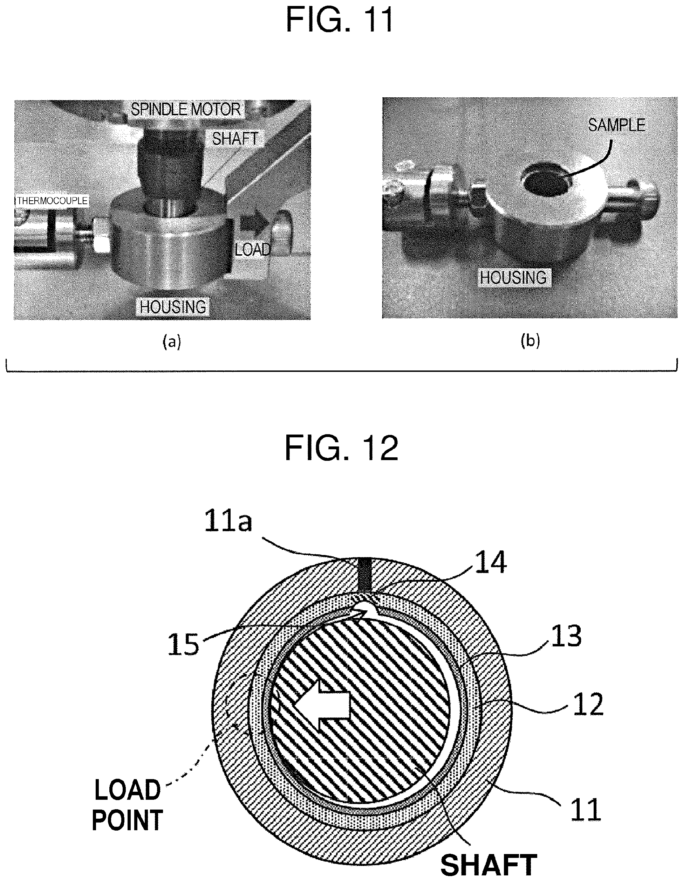

The performances of the sliding members of Examples and Comparative Examples 1 to 3 were then compared by a high-speed rotational abrasion test. Figure 11 shows a high-speed rotational abrasion tester. This tester measures the temperature on the rear side of a bearing during the application of a load and speed to a test material through the mating shaft, and is suitable for evaluating the abrasion loss or the heat generation mainly in the high-speed region. An oil bath is disposed in the test section. The tester is designed to enable evaluations both in oil and without lubrication. In order to achieve high-speed rotation, a spindle motor (type S262B-SJ03, rated output: 1.2 kW, rated voltage: 200 V, rated current 4.8 A) available from SHIN-OH ELECTRIC CO., LTD. was directly connected to a tip of the mating shaft Φ6h7 through a collet chuck. This designed the tester as an apparatus that enables evaluation at up to 60,000 rpm with accuracy such that the axial runout was 0.002 mm or less. The spindle motor is water-cooled at a flow rate of 0.7 L/min through a chiller.

The mating shaft has an outer diameter of 11.957 to 11.975 mm, and the housing has an inner diameter of 14.000 to 14.018 mm. The materials of both are SKD-11, and the hardness after full hardening is HRC58. The temperature on the rear side of the bearing was measured at a point 1.5 mm away from the rear side of the bearing using a data logger every second while a thermocouple was inserted into a hole having a diameter of 6 mm.

Then, the performance greatly depends on the test conditions, namely whether a bearing section is lubricated or not. For example, in air conditioning compression mechanism such as a car air conditioner compressor, lubricating oil scarcely flows into the bearing under the condition that the orbiting scroll are swirled while the orbiting scroll is strongly pressed against the fixed scroll. Furthermore, higher-speed rotation is essential in driving motors for EVs for balancing the downsizing and weight saving and the output enhancement. Although oil-lubricated bearings and grease-lubricated bearings are adopted as bearings supporting motors, the bearing sections can scarcely be expected to be oil-lubricated due to the simplification of the surrounding structure. The test measured the frictional heat generation and the abrasion loss vs. the rotational speed of the shaft for evaluation without lubrication in view of these practical restrictions and others. The frictional heat generation was analyzed using the rate of increase in the temperature of the bearing as an evaluation index by the regression analysis of the gradient of the temperature on the rear side of the bearing vs. the time elapsed until the temperature reached 80°C. The sliding member was measured for thicknesses before and after the test with a micrometer for pipes, followed by calculation of the abrasion loss from a variation in thickness at the load point.

The main shaft of a compressor is supposed to rotate at a rotational speed of up to 10,000 rpm. The shaft of an EV motor is supposed to rotate at a rotational speed of up to around 30,000 rpm. The range was set at 10,000 to 50,000 rpm in view of this. A unidirectional radial load of 10 N was applied to the bearing in view of the use limit and the safety of the spindle motor rotating at high speed. The shaft was polish-finished to a surface roughness, Ra, of 0.17 μm with the target value of the clearance between the bearing and the shaft adjusted to 0.1 mm, followed by testing the bearing.

Since the sliding member according to Example was provided with the region 15 where the resin composition is absent, on a part of the inner peripheral surface, as shown in Figure 12, the position at 90° in the circumferential direction with respect to the region 15 was determined as a load point (hereinafter, the position of this load point is referred to as the load division A).

Since the power can be converted into the electrical power, the frictional torque due to the rotational movement can be expressed by the following equation (1):

$$E = P = 2\pi \bullet N \bullet T/60 = 2\pi \bullet N \bullet F \bullet R/60 \text{ ... Equation (1)}$$

wherein R is the radius of gyration (m), F is frictional force (N), N is shaft rotational speed (rpm), T is torque (N•m), E is electrical power (W), and P is power (W).

(Results and discussion)

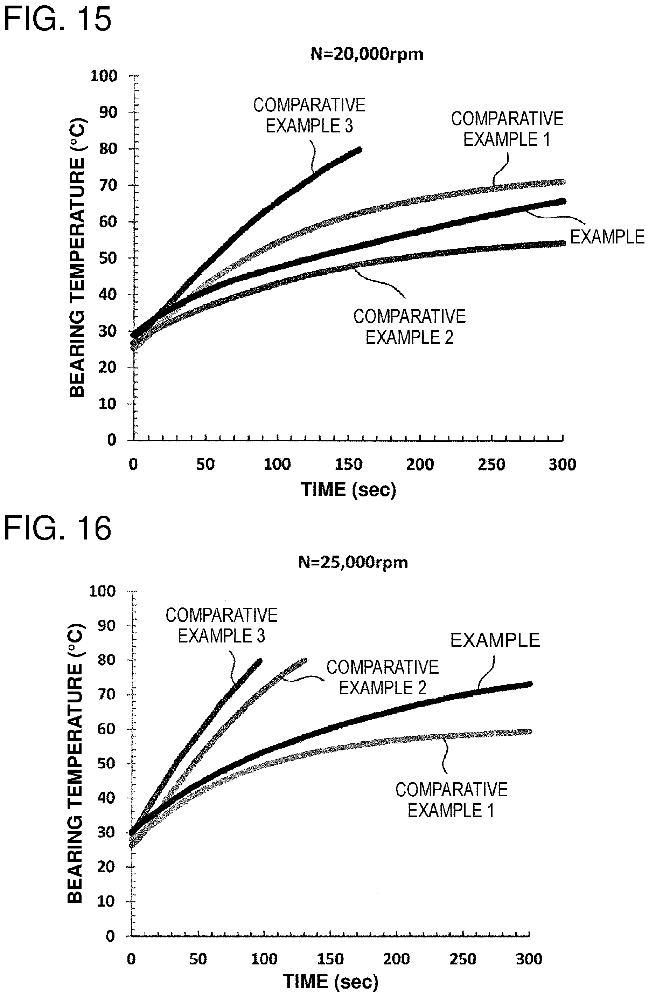

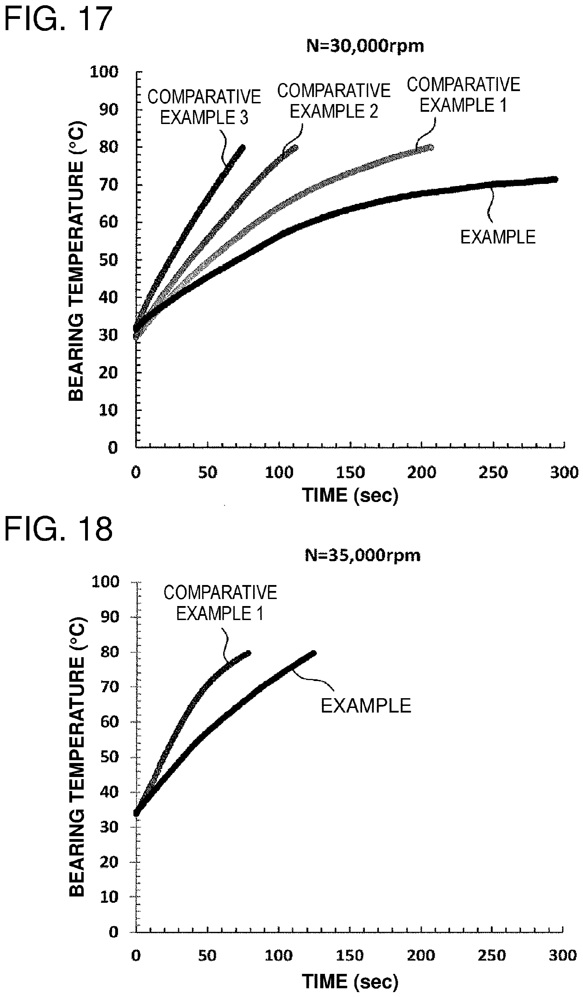

Figure 14 is a graph showing variations over time in temperature on the rear sides of bearings, namely the sliding members according to Example and Comparative Examples 1 to 3, measured at a shaft rotational speed, N, of 15,000 rpm. Figure 15 is a graph showing variations over time in temperature on the rear sides of bearings measured at a shaft rotational speed, N, of 20,000 rpm. Figure 16 is a graph showing variations over time in temperature on the rear sides of bearings measured at a shaft rotational speed, N, of 25,000 rpm. Figure 17 is a graph showing variations over time in temperature on the rear sides of bearings measured at a shaft rotational speed, N, of 30,000 rpm. Figure 18 is a graph showing variations over time in temperature on the rear sides of bearings measured at a shaft rotational speed, N, of 35,000 rpm.

As shown in Figures 14 to 16, the temperature of the sliding member according to Example changes over time in the same manner as the temperatures of the sliding members according to Comparative Examples 1 and 2 in a high-speed rotational region of a shaft rotational speed, N, of 15,000 to 30,000 rpm. Accordingly, it has been confirmed that the sliding member according to Example has equivalent function to the sliding members according to Comparative Examples 1 and 2 (that is, the sliding members proposed in Japanese Patent Application No. 2023-026107) in a high-speed rotational region of a shaft rotational speed, N, of 15,000 to 30,000 rpm.

As shown in Figures 17 and 18, the temperature of the sliding member according to Example furthermore changes more gradually than the temperatures of the sliding members according to Comparative Examples 1 and 2 in a high-speed rotational region of a shaft rotational speed, N, of 30,000 rpm or more. Accordingly, it has been confirmed that the temperature rise of the sliding member according to Example is suppressed as compared with the sliding members according to Comparative Examples 1 and 2 (that is, the sliding members proposed in Japanese Patent Application No. 2023-026107) especially in a high-speed rotational region of a shaft rotational speed, N, of 30,000 rpm or more.

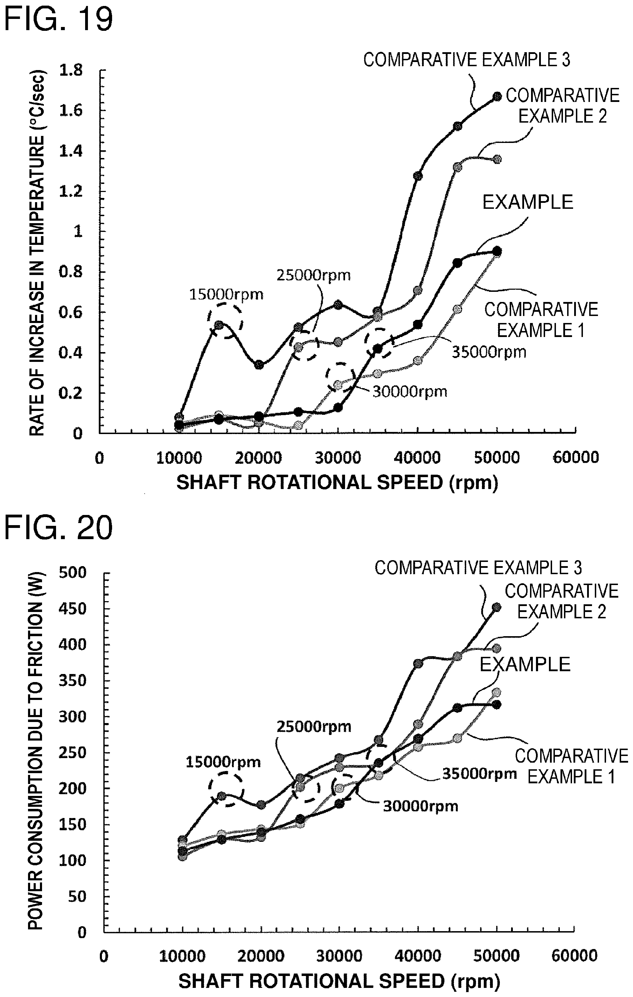

Figure 19 is a graph showing variations in the rates of increase in temperature of the sliding members according to Example and Comparative Examples 1 to 3 vs. the shaft rotational speed in the range of 10,000 to 50,000 rpm. Figure 20 is a graph showing variations in power consumption of the sliding members according to Example and Comparative Examples 1 to 3 vs. the shaft rotational speed in the same range.

As shown in Figures 19 and 20, the rates of increase in temperature and the power consumption of the sliding members according to Comparative Examples 3, 2, and 1 sharply rise at shaft rotational speeds of 15,000 rpm, 25,000 rpm, and 30,000 rpm, respectively. Meanwhile, the rate of increase in temperature and the power consumption of the sliding member according to Example sharply rise at a shaft rotational speed of 35,000 rpm. Accordingly, it has been confirmed that the acceptable limit rotational speed of the sliding member according to Example is higher than those of the sliding members according to Comparative Examples 1 to 3.

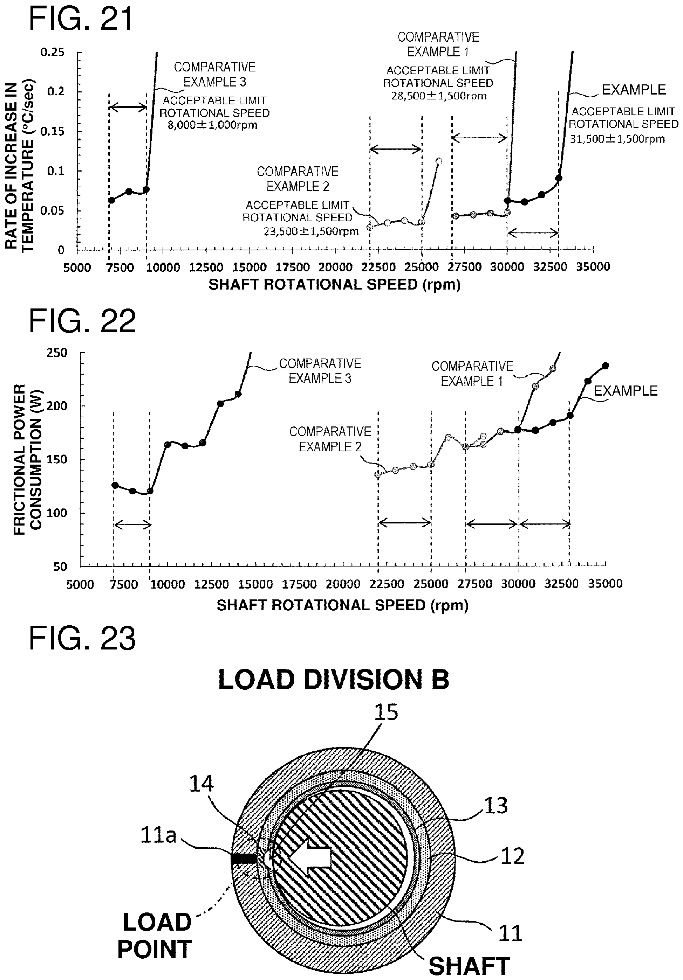

An additional evaluation test was performed at rotational speeds varied gradually in the neighborhoods of the shaft rotational speed at which the rates of increase in temperature and the power consumption rise sharply. Figure 21 is a graph showing variations in the rates of increase in temperature of the sliding members according to Example and Comparative Examples 1 to 3 vs. the shaft rotational speed in the neighborhoods of shaft rotational speeds at which the rates of increase in temperature and the power consumption rise sharply. Figure 22 is a graph showing variations in power consumption vs. the shaft rotational speed in the same ranges.

As shown in Figures 21 and 22, the rate of increase in temperature and the power consumption of the sliding member according to Comparative Example 3 are almost constant in the range of a shaft rotational speed of 7,000 to 8,000 rpm, and sharply rise at more than 8,000 rpm, so that it can be determined that the acceptable limit rotational speed is 8,000 ± 1,000 rpm. The rate of increase in temperature and the power consumption of the sliding member according to Comparative Example 2 are almost constant in the range of a shaft rotational speed of 22,000 to 25,000 rpm, and sharply rise at more than 25,000 rpm, so that it can be determined that the acceptable limit rotational speed is 23,500 ± 1,500 rpm. The rate of increase in temperature and the power consumption of the sliding member according to Comparative Example 1 are almost constant in the range of a shaft rotational speed of 27,000 to 30,000 rpm, and sharply rise at more than 30,000 rpm, so that it can be determined that the acceptable limit rotational speed is 28,500 ± 1,500 rpm. The rate of increase in temperature and the power consumption of the sliding member according to Example are almost constant in the range of a shaft rotational speed of 30,000 to 33,000 rpm, and sharply rise at more than 33,000 rpm, so that it can be determined that the acceptable limit rotational speed is 31,500 ± 1,500 rpm.

In order to investigate the influence of the region 15 where the resin composition is absent, on a part of the inner peripheral surface, on the effect of suppressing the temperature rise, as shown in Figure 23, the sliding member according to Example was subjected to an additional evaluation test in which the position identical with the region 15 in the circumferential direction is determined as a load point (hereinafter, this load point is referred to as a load division B.).

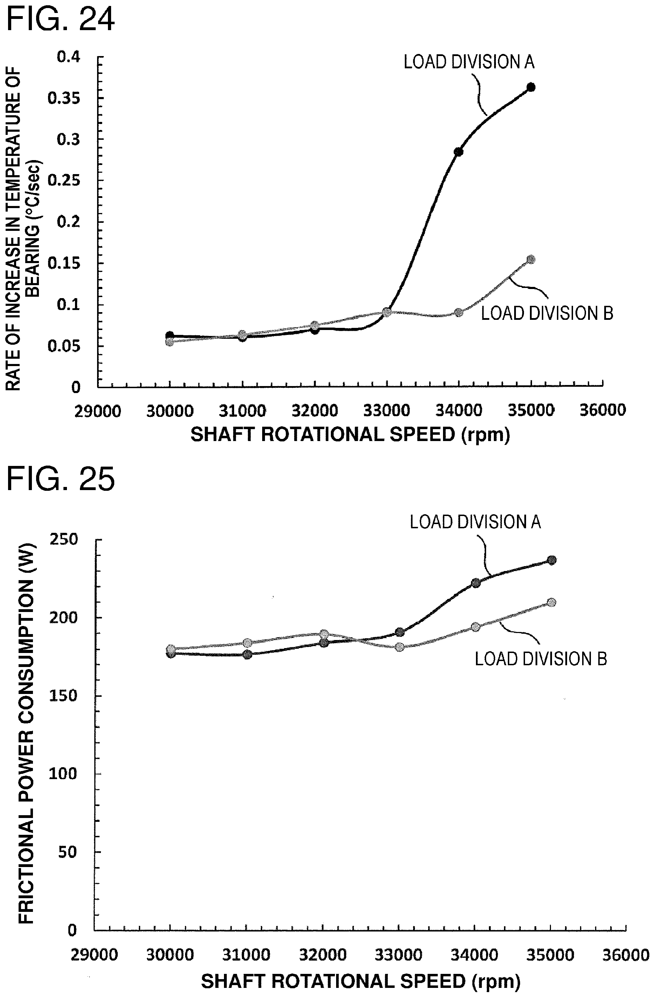

Figure 25 is a graph showing variations in the rates of increase in temperature of the sliding member according to Example measured at the load divisions A and B vs. the shaft rotational speed. Figure 26 is a graph showing variations in power consumption vs. the shaft rotational speed.

As shown in Figures 25 and 26, the rates of increase in temperature at the load divisions A and B and the power consumption at the load divisions A and B change in almost the same manner in the range of a shaft rotational speed of 30,000 to 33,000 rpm. Both the rates of increase in temperature and the power consumption at the load division A however rise as compared with those at the load division B in the range of a shaft rotational speed of 33,000 rpm or more. It is conjectured that while, in the case of the load division A, frictional heat in the contact site is accumulated to increase the temperature, in the case of the load division B, the groove in the region 15 without the resin composition reduces frictional heat in the contact site, and facilitates heat radiation to suppress the temperature rise.

Although the embodiments and the variations were described above by illustration, the scope of the present technology is not limited to these. The embodiments and the variations can be modified and varied depending on the object within the scope described in claims. As long as the treatment contents do not conflict with each other, the embodiments and the variations can be appropriately combined.

**Claims**

1. A sliding member comprising:

   a cylindrical metal substrate;
   a porous layer formed on an inner peripheral surface of the metal substrate; and
   a sliding layer covering the porous layer,
   wherein the porous layer is formed of a metal simple substance or an alloy composition,
   the sliding layer is formed of a resin composition, and
   the sliding member has, on a part of the inner peripheral surface, a region where the resin composition is absent and thus a nonporous layer formed of the metal simple substance or the alloy composition is exposed.

2. The sliding member according to claim 1, wherein the region is disposed so as to extend from one end to the other end in an axial direction of the sliding member.

3. The sliding member according to claim 1 or 2,
   wherein a hard particle powder comprising a Laves phase constituted of a composition of Co, Mo and Si is dispersed in the sliding layer.

4. The sliding member according to claim 3,
   wherein one or more of $MoS_2$ powder and bronze powder not comprising a Laves phase are further dispersed in the sliding layer.

5. The sliding member according to claim 1 or 2,
   wherein the resin composition comprises copper sulfide, a thermoplastic resin, molybdenum disulfide, graphite, and aramid fiber, with the balance consisting of a fluorine resin, wherein the resin composition comprises more than 3% by mass and less than 40% by mass of the copper sulfide, 0% by mass or more and less than 4% by mass of the thermoplastic resin, 0% by mass or more and 36% by mass or less of the molybdenum disulfide, 0% by mass or more and 10% by mass or less of the graphite, and 0% by mass or more and 10% by mass or less of the aramid fiber, with the balance being the fluorine resin.

6. The sliding member according to claim 1 or 2,

   wherein the porous layer has
   a matrix phase comprising Cu and Sn, and
   hard particles dispersed in the matrix phase and comprising a Laves phase constituted of a composition of Co, Mo and Si.

7. The sliding member according to claim 6,

   wherein the porous layer further has
   compound phases dispersed in the matrix phase and comprising Co, Fe, Ni, Si, and Cr.

8. The sliding member according to claim 1 or 2,
   wherein a ratio of a thickness of the porous layer to a thickness of the sliding layer is 6:4 to 8:2.

9. A bearing comprising:

   a cylindrical metal substrate;
   a porous layer formed on an inner peripheral surface of the metal substrate; and
   a sliding layer covering the porous layer,

wherein the porous layer is formed of a metal simple substance or an alloy composition,

the sliding layer is formed of a resin composition, and

the bearing has, on a part of the inner peripheral surface, a region where the resin composition is absent and thus a nonporous layer formed of the metal simple substance or the alloy composition is exposed.

10. A method for manufacturing a sliding member, comprising:

a step of forming a porous layer comprising a metal simple substance or an alloy composition on one surface of a metal substrate;

a step of curling the metal substrate with the porous layer inside to shape into a cylinder;

a step of welding a seam portion from outside the metal substrate, wherein the porous layer on the seam portion is molten to form a nonporous layer formed of the metal simple substance or the alloy composition; and

a step of impregnating a surface of the porous layer with a raw material resin of a sliding layer and firing the raw material resin to form a sliding layer comprising the resin composition and covering the porous layer, wherein a surface of the nonporous layer is not impregnated with the raw material resin, whereby a region where the resin composition is absent and thus the nonporous layer is exposed is formed on a part of an inner peripheral surface of the sliding member.

11. A method for manufacturing a sliding member, comprising:

a step of forming a porous layer comprising a metal simple substance or an alloy composition on one surface of a metal substrate;

a step of impregnating a surface of the porous layer with a raw material resin of a sliding layer and firing the raw material resin to form a sliding layer comprising the resin composition and covering the porous layer;

a step of curling the metal substrate with the sliding layer inside to shape into a cylinder; and

a step of welding a seam portion from outside the metal substrate, wherein the porous layer on the seam portion is molten to form a nonporous layer formed of the metal simple substance or the alloy composition, and the sliding layer on the seam portion is separated, whereby a region where the resin composition is absent and thus the nonporous layer is exposed is formed on a part of an inner peripheral surface of the sliding member.

12. The method according to claim 10 or 11, further comprising:

a step of pressing a columnar cored bar inside an inner peripheral surface of the sliding layer with an outer peripheral surface of the metal substrate held with a die to burnish the inner peripheral surface of the sliding layer.

# FIG. 1

20

13

10

11

# FIG. 2

# FIG. 3

# FIG. 4

# FIG. 5

# FIG. 6

```
        ┌─────────┐
        │  START  │
        └─────────┘
             │
             ▼
  ┌──────────────────────┐
  │   SPRINKLING RAW     │ ～ S10
  │   MATERIAL POWDER    │
  └──────────────────────┘
             │
             ▼
  ┌──────────────────────┐
  │  SINTERING TO FORM   │ ～ S20
  │    POROUS LAYER      │
  └──────────────────────┘
             │
             ▼
  ┌──────────────────────┐
  │   SHAPE CYLINDER     │ ～ S30
  └──────────────────────┘
             │
             ▼
  ┌──────────────────────┐
  │   WELDING SEAM       │ ～ S40
  │     PORTION          │
  └──────────────────────┘
             │
             ▼
  ┌──────────────────────┐
  │  IMPREGNATING WITH   │ ～ S50
  │  RAW MATERIAL RESIN  │
  └──────────────────────┘
             │
             ▼
  ┌──────────────────────┐
  │   FIRING TO FORM     │ ～ S60
  │   SLIDING LAYER      │
  └──────────────────────┘
             │
             ▼
  ┌──────────────────────┐
  │     BURNISHING       │ ～ S70
  └──────────────────────┘
             │
             ▼
        ┌─────────┐
        │   END   │
        └─────────┘
```

# FIG. 7

START

↓

SPRINKLING RAW MATERIAL POWDER — S10

↓

SINTERING TO FORM POROUS LAYER — S20

↓

IMPREGNATING WITH RAW MATERIAL RESIN — S150

↓

FIRING TO FORM SLIDING LAYER — S160

↓

SHAPE CYLINDER — S130

↓

WELDING SEAM PORTION — S140

↓

BURNISHING — S70

↓

END

# FIG. 8

SPRINKLING MIXED POWDER OR ALLOY POWDER

Cu-BASED POWDER + BRONZE-BASED POWDER

MIXING POWDERS

BACK METAL

SINTERING FURNACE

EP 4 692 578 A1

# FIG. 9

11

12

IMPREGNATION ROLL

RESIN

# FIG. 10

42

11

41

11

# FIG. 11

(a)                                        (b)

# FIG. 12

# FIG. 13

| | | Example | Comparative Example 1 | Comparative Example 2 | Comparative Example 3 |
|---|---|---|---|---|---|
| Sliding layer | Hard particle powder | 15 | 15 | 15 | 0 |
| | Graphite | 1.1 | 1.1 | 1.1 | 4 |
| | MoS$_2$ | 15 | 15 | 15 | 7.25 |
| | PTFE | Balance | Balance | Balance | Balance |
| Substrate | Material | Carbon steel | Carbon steel | Carbon steel | Carbon steel |
| | Seam | Welded | Absent | Present | Present |
| Porous layer | Material | Cu-10Sn bronze powder | Cu-10Sn bronze powder | Cu-10Sn bronze powder | Cu-10Sn bronze powder |
| | Seam | Nonporous layer | Absent | Absent | Present |
| Processing of sliding layer | | Burnished | Burnished | Burnished | Absent |

# FIG. 14

N=15,000rpm

## FIG. 15

N=20,000rpm

## FIG. 16

N=25,000rpm

## FIG. 17

N=30,000rpm

Graph: BEARING TEMPERATURE (°C) vs TIME (sec), showing COMPARATIVE EXAMPLE 3, COMPARATIVE EXAMPLE 2, COMPARATIVE EXAMPLE 1, and EXAMPLE.

## FIG. 18

N=35,000rpm

Graph: BEARING TEMPERATURE (°C) vs TIME (sec), showing COMPARATIVE EXAMPLE 1 and EXAMPLE.

## FIG. 19

## FIG. 20

# FIG. 21

# FIG. 22

# FIG. 23

## LOAD DIVISION B

## FIG. 24

## FIG. 25

## FIG. 26

## FIG. 27

## INTERNATIONAL SEARCH REPORT

| International application No. |
| --- |
| **PCT/JP2024/017877** |

**A. CLASSIFICATION OF SUBJECT MATTER**

*F16C 33/20*(2006.01)i; *F16C 33/14*(2006.01)i
FI:    F16C33/20 Z; F16C33/14 Z

According to International Patent Classification (IPC) or to both national classification and IPC

**B. FIELDS SEARCHED**

Minimum documentation searched (classification system followed by classification symbols)

F16C33/20; F16C33/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2010/134458 A1 (NTN CORPORATION) 25 November 2010 (2010-11-25) entire text, all drawings | 1-12 |
| A | JP 2002-039183 A (ASMO CO., LTD.) 06 February 2002 (2002-02-06) entire text, all drawings | 1-12 |
| A | JP 2018-071710 A (SENJU METAL INDUSTRY CO., LTD.) 10 May 2018 (2018-05-10) entire text, all drawings | 1-12 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **28 June 2024** | **16 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/017877**

| Patent document cited in search report | | | Publication date (day/month/year) | Patent family member(s) | | | Publication date (day/month/year) |
|---|---|---|---|---|---|---|---|
| WO | 2010/134458 | A1 | 25 November 2010 | US entire text, all drawings | 2012/0039552 | A1 | |
| JP | 2002-039183 | A | 06 February 2002 | US entire text, all drawings | 2002/0001420 | A1 | |
| JP | 2018-071710 | A | 10 May 2018 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018179049 A

- JP 2023026107 A